# EUROPÄISCHE PATENTSCHRIFT

(11) **EP 3 869 145 B1**
(45) Veröffentlichungstag und Bekanntmachung des Hinweises auf die Patenterteilung: **19.11.2025**
(21) Anmeldenummer: 21157507.1
(22) Anmeldetag: 17.02.2021
(51) Int. Cl.: F41G 7/22

(54) **VERFAHREN ZUR ZIELFÜHRUNG EINES FLUGKÖRPERS, FLUGKÖRPERSTEUERUNG UND FLUGKÖRPER**
METHOD FOR GUIDING A MISSILE, MISSILE CONTROL AND MISSILE
PROCÉDÉ DE GUIDAGE À LA DESTINATION D'UN MISSILE, COMMANDE DE MISSILE ET MISSILE

(30) Priorität: 21.02.2020 DE 102020001157
(43) Veröffentlichungstag der Anmeldung: 25.08.2021
(73) Patentinhaber: Diehl Defence GmbH & Co. KG, 88662 Überlingen (DE)
(72) Erfinder: Hackel, Martin, 88662 Überlingen (DE); Koch, Volker, 90607 Rückersdorf (DE); Ganser, Michael, 88662 Überlingen (DE)
(74) Vertreter: Diehl Patentabteilung

(56) Entgegenhaltungen:
- EP-A1- 3 221 921
- DE-A1- 3 145 374
- DE-A1- 4 442 134

## Beschreibung

Die zu Grunde liegende Erfindung betrifft ein Verfahren zur Zielführung eines Flugkörpers, eine Flugkörpersteuerung und einen Flugkörper.

Aus dem Stand der Technik sind beispielsweise Waffenleitsysteme bekannt, die zum Leiten einer Waffe zu einem Ziel ein Radar mit synthetischer Apertur verwenden. Ein solches Waffenleitsystem ist beispielsweise aus der DE 695 15 790 T2 bekannt, bei dem eine Abschussplattform mit einer Radareinrichtung mit synthetischer Apertur ausgestattet ist. Mittels der Radareinrichtung der Abschussplattform kann das ein Ziel umgebende Gebiet kartiert werden und aus der Kartierung kann der Ort des Ziels bestimmt werden. Basierend auf dem von der Radareinrichtung der Abschussplattform bestimmten Ort des Ziels wird die Waffe zum Ziel geflogen.

Aus der DE 31 45 374 A1 ist ein Verfahren bekannt, mit dem Bodenziele mittels eines Flugkörpers bekämpft werden können. Der Flugkörper weist einen Mittel- und Endphasensuchkopf auf, wobei mit einem Radarsuchkopf in der Mittelphase eine Koordination von Mehrfachzielen erfolgt und durch Zielauswahl ein Anflugkurs für die Endphase bestimmt wird. Der Radarsuchkopf arbeitet nach dem Prinzip der synthetischen Apertur, wobei in der Mittelphase quer zur Flugrichtung Flächen abgetastet werden und basierend auf der Dopplerhistorie einzelne Punkte der abgetasteten Fläche aufgelöst werden.

Aus der WO 02/088770 A2 ist ein Verfahren zur Erkennung und Identifizierung von Objekten bei Flugkörpern bekannt. Bei dem Verfahren wird die Umgebung des Flugkörpers mittels eines nach dem Prinzip der synthetischen Apertur arbeitenden Radargeräts abgetastet, wobei das Radargerät eine Vielzahl von Antennenelementen umfasst, die entlang der gekrümmten Flugkörperkontur der Flugkörperspitze angebracht sind.

Obgleich die bekannten Verfahren eine Zielsteuerung bei einem Flugkörper ermöglichen, ist es dennoch wünschenswert, die Genauigkeit der Zielnavigation und Zielführung zu verbessern.

Die DE 44 42 134 A1 betrifft eine Lenkschleife für Flugkörper, welche durch einen Suchkopf zu einem Ziel geführt werden. Der Suchkopf weist ein begrenztes Gesichtsfeld auf. Der Suchkopf ist dazu eingerichtet, eine Sichtlinie zu einem Ziel durch Schielwinkel in Bezug auf flugkörperfeste Nick- und Gierachsen zu bestimmen. Ferner sind Signalverarbeitungsmittel vorgesehen, welche Signale zur Bewegung des Flugkörpers derart beeinflussen, dass die Sichtlinie stets im Bereich des Gesichtsfelds des Suchkopfes gehalten wird.

Die WO 2016/081058 A1 betrifft eine breitbandige Antennenstruktur mit optischem Reflektor als Grundfläche zur Verwendung bei Flugkörpern. Konkret offenbart die WO 2016/081058 A1 ein kompaktes Wandlersystem mit einer Antenneneinheit mit mehreren Funkfrequenz- (RF-)Strahlern, die sich von einer Grundplatte erstrecken und an gegenüberliegenden Seiten der Grundplatte angeordnet sind. Ferner ist ein mit der Antenneneinheit integriert ausgebildetes optisches Wandlersystem vorgesehen, bei dem die Grundplatte einen optischen Reflektor bildet.

Ausgehend davon ist es eine Aufgabe der Erfindung, ein Verfahren zur Zielführung eines Flugkörpers, eine Flugkörpersteuerung zur Zielführung eines Flugkörpers und einen Flugkörper mit einer Flugkörpersteuerung bereitzustellen, die eine verbesserte Zielführung ermöglichen. Ferner kann es als eine Aufgabe der Erfindung angesehen werden, eine Flugkörpersteuerung zur Zielführung eines Flugkörpers, ein Verfahren zur Zielführung eines Flugkörpers und einen Flugkörper bereitzustellen, welche Vorteile hinsichtlich der Funktionalisierung des Flugkörpers bieten.

Diese Aufgabe wird gelöst durch die Merkmale der unabhängigen Ansprüche. Ausgestaltungen der Erfindung ergeben sich aus den abhängigen Ansprüchen sowie aus der nachfolgenden Beschreibung von Ausgestaltungen und beispielhafter Ausführungsformen.

Nach einer Ausgestaltung ist eine Flugkörpersteuerung zur Zielführung, beispielsweise zur Zielnavigation, eines Flugkörpers längs einer Flugbahn zu einem Zielobjekt vorgesehen. Bei dem Zielobjekt kann es sich um ein ruhendes oder bewegtes Zielobjekt handeln.

Die Flugkörpersteuerung ist insbesondere ausgebildet zur funktionellen Montage oder Integration an oder in einem Flugkörper, beispielsweise an oder in einem Flugkörperkorpus. Funktionell soll in diesem Zusammenhang insbesondere so verstanden werden, dass die generellen Flugeigenschaften des Flugkörpers, insbesondere hinsichtlich Aerodynamik bei montierter bzw. integrierter Flugkörpersteuerung und zugehörigen Sensoren nicht, zumindest jedoch nicht wesentlich beeinträchtigt werden. Beispielsweise können die Flugkörpersteuerung, insbesondere zugehörige Sensoren, dazu eingerichtet sein, an oder in einem Flugkörperkorpus des Flugkörpers zwischen Flugkörperspitze und Antriebseinheit des Flugkörpers integriert zu werden. Dazu kann die Flugkörpersteuerung beispielsweise ein Flugkörperkorpus-Segment umfassen, an oder in einem solchen montiert oder an oder in ein solches integriert sein. Das Flugkörperkorpus-Segment kann beispielsweise entsprechende Montageschnittstellen oder Integrationsschnittstellen umfassen, die eine Montage bzw. Integration zwischen Flugkörperspitze und antriebsseitigem Ende des Flugkörpers ermöglichen.

Bei dem Flugkörper kann es sich beispielsweise um einen Lenkflugkörper handeln, der von einer Starteinheit abgefeuert werden kann. Ein solcher Flugkörper kann, in Längsrichtung des Flugkörpers betrachtet, an einem in Längsrichtung gelegenen kopfseitigen Ende insbesondere einen Flugkörperkopf und an einem davon abgewandten antriebsseitigen Ende einen Flugkörperantrieb umfassen.

Die Starteinheit kann dabei bodengebunden, luftgebunden und/oder wassergebunden sein.

Die Flugkörpersteuerung umfasst zumindest einen zur Erfassung von Umgebungsdaten eingerichteten Seitensichtsensor mit einem quer zur Längsachse des Flugkörpers ausgerichteten Sichtfeld.

Unter einem Seitensichtsensor soll dabei insbesondere eine Sensoreinheit verstanden werden, die einen oder mehrere Sensoren aufweist, der/die zwischen dem am kopfseitigen Ende gelegenen Flugkörperkopf und dem am antriebsseitigen Ende gelegenen Flugkörperantrieb gelegen, insbesondere positioniert, ist/sind. Ferner soll unter einem solchen Seitensichtsensor eine Sensoreinheit verstanden werden, deren ein oder mehrere Sensoren jeweils ein Sichtfeld aufweisen, dessen Mittenachse bzw. Zentralachse bezüglich der Längsachse des Flugkörpers als Polachse im montierten Zustand stets einen von Null verschiedenen, insbesondere spitzen, Polarwinkel aufweist/en. Ein solcher Seitensichtsensor kann beispielsweise an einer Seitenwand des Flugkörpers angebracht oder in einer Seitenwand des Flugkörpers integriert sein.

Der Polarwinkel ist dabei bezüglich einer durch die Längsachse des Flugkörpers definierten Polachse im Sinne von Kugelkoordinaten, genauer bezüglich einer parallel zur Längsachsenrichtung des Flugkörpers verlaufenden Polachse und der Mitten- bzw. Zentralachse des Sensorfelds zu verstehen. Dabei ist der Polarwinkel als derjenige Winkel zu verstehen, der gemessen ist zwischen dem von antriebsseitigem Ende zu kopfseitigem Ende längs der Polachse weisenden Polachsenvektor und dem längs der jeweiligen Mitten- bzw. Zentralachse verlaufenden und in Richtung des Sichtfelds vom Flugkörper weg weisenden Mitten- bzw. Zentralachsenvektor.

Ein entsprechender Seitensichtsensor weist im montierten Zustand bezüglich des Polarwinkels mithin stets ein bezüglich der Flugkörperachse nicht konzentrisches Sichtfeld auf. Zur Vermeidung von Unklarheiten soll die Richtung der positiven Polachse, d.h. der Polachsenvektor, bezüglich eines rechtshändigen Bezugssystems des Flugkörpers in Kugelkoordinaten verstanden werden, wobei die Richtung der positiven Polachse durch die von antriebsseitigem Ende zu kopfseitigem Ende verlaufende Richtung definiert ist. Entsprechend dieses Kugelkoordinatensystems ist der Polarwinkel in dem vorgenannten Sinne zu verstehen. Ein zugehöriger Azimutwinkel ist als ein rechtshändig in Umfangsrichtung zum Polachsenvektor gemessener Winkel zu verstehen.

Die obigen Ausführungen bezüglich der Ausrichtung des Sichtfelds im Hinblick auf Kugelkoordinaten sollen entsprechend für andere, von Kugelkoordinatensystemen verschiedene Koordinatensysteme gelten, insbesondere für Koordinatensysteme, die nicht ortsfest mit dem Flugkörper assoziiert sind.

Der Begriff Sichtfeld soll dabei allgemein verstanden werden und nicht auf optische Sensoren beschränkt sein, sondern entsprechend für beliebige Sensoren, beispielsweise für Infrarot-Sensoren, Radarsensoren und andere Sensorarten gelten, die dazu geeignet sind, bei Implementierung als Seitensichtsensor ein Zielobjekt erfassen zu können.

Die Flugkörpersteuerung umfasst des Weiteren eine Steuereinheit mit einer Empfangseinheit zum Empfang von Zielobjekt-Daten betreffend das Zielobjekt. Die Zielobjekt-Daten umfassen Positionsdaten, Orientierung und Geschwindigkeit des Zielobjekts.

Daten zur Position, Orientierung und/oder Geschwindigkeit des Flugkörpers können in bekannter Weise beispielsweise aus einer Inertialnavigation ermittelt werden.

Die Empfangseinheit empfängt die Zielobjekt-Daten von einer flugkörper-externen Sendeeinheit. Bei Bedarf können auch Daten zum Flugkörper von der flugkörper-externen Sendeeinheit empfangen werden, beispielsweise in Form von Positionsdaten als Ausgangspunkt für eine Inertialnavigation.

Die Sendeeinheit kann beispielsweise Bestandteil einer dem Flugkörper zugeordneten Kontrolleinheit sein. Bei der Kontrolleinheit kann es sich beispielsweise um eine boden-, luft-, oder wassergebundene Kontrolleinheit für den Flugkörper handeln, die z.B. Bestandteil einer Starteinheit oder einer Start- oder Abschussplattform für den Flugkörper sein kann. Die Sendeeinheit der Kontrolleinheit kann die Zielobjekt-Daten, sowie andere Daten zum Flugkörper, beispielsweise kabelgebunden vor Start oder Abschuss des Flugkörpers an diesen übertragen. Möglich ist auch, dass die Kontrolleinheit die Zielobjekt-Daten und andere Daten kabellos an die Empfangseinheit überträgt, insbesondere nach Start oder Abschuss des Flugkörpers.

Unter einer Übertragung bzw. dem Empfang von Zielobjekt-Daten soll insbesondere auch verstanden werden oder umfasst sein, dass in einem vorausgehenden Datenübertragungsschritt übertragene bzw. empfangene Zielobjekt-Daten aktualisiert werden, d.h. dass eine Aktualisierung der Zielobjekt-Daten erfolgt.

Die Steuereinheit ist derart eingerichtet, dass die Orientierung des Flugkörpers, insbesondere der Gier-, Nick-, und/oder Rollwinkel des Flugkörpers, bei der Zielführung zumindest teilweise basierend auf den empfangenen Zielobjekt-Daten derart eingestellt werden kann, dass das Zielobjekt zumindest in Abschnitten einer finalen Zielführungsphase, insbesondere einer Abfangphase, im Sichtfeld des Seitensichtsensors gelegen ist.

Damit die Steuereinheit eingerichtet ist zur Durchführung bzw. Ausführung der jeweiligen, hierin beschriebenen Funktionen, kann diese entsprechend programmiert sein.

Die Programmierung kann dabei als Festprogrammierung auf einem entsprechenden Steuerbaustein vorliegen und/oder in Form von Instruktionen gegeben sein, die bei Ausführung durch eine Rechnereinheit, insbesondere einen Prozessor, der Steuereinheit eine Ausführung der jeweiligen, hierin beschriebenen Funktionen bewirken.

Insbesondere kann der Flugkörper mit der vorgeschlagenen Flugkörpersteuerung durch Einstellen der Orientierung des Flugkörpers, insbesondere durch Einstellen bzw. Steuern der Ausrichtung des Flugkörpers und damit des Seitensichtsensors, basierend auf den Zielobjekt-Daten als Vorwissen so gesteuert werden, dass ein bei Abschuss bzw. Start des Flugkörpers anvisiertes, jedoch bei Start noch nicht im Sichtfeld des Seitensichtsensors gelegenes Zielobjekt nach dem Start des Flugkörpers in den Erfassungsbereich des Sichtfelds des Seitensichtsensors gelangt, so dass das Zielobjekt vom Seitensichtsensor erfasst und verfolgt werden kann. Nach Erfassung des Zielobjekts durch den Seitensichtsensor, insbesondere nach erstmaliger Erfassung des Zielobjekts durch den Seitensichtsensor, kann der Flugkörper basierend auf den durch den Seitensichtsensor erfassten Sensordaten gesteuert, insbesondere navigiert, werden. Beispielsweise können aus den Sensordaten Informationen, konkret Daten zu Position, Orientierung und Geschwindigkeit des Zielobjekts, ermittelt werden. Basierend auf den ermittelten Informationen kann die Flugkörpersteuerung den Flugkörper zum Zielobjekt navigieren.

Dabei kann die Steuerung des Flugkörpers insbesondere derart erfolgen und es kann die Flugbahn und Orientierung, z. B. der Rollwinkel, des Flugkörpers derart gesteuert werden, dass das Zielobjekt einerseits vom Seitensichtsensor erfassbar bleibt, also weiterhin im Sichtfeld des Seitensichtsensors liegt, und andererseits ein ermittelter, voraussichtlicher Begegnungsort des Flugkörpers mit dem Zielobjekt erreicht werden kann. Die Orientierung soll dabei insbesondere die Lage und Ausrichtung des Flugkörpers im dreidimensionalen Raum umfassen, die bei Flugkörpern üblicherweise auf Grundlage des Gierwinkels, des Nickwinkels und des Rollwinkels beschrieben werden, wobei diese Winkel Drehungen beschreiben, die ein festes Referenzsystem in ein flugkörperbezogenes rechtshändiges Koordinatensystem überführen. Gierwinkel, Nickwinkel und Rollwinkel beschreiben insoweit entsprechende Lagen und Ausrichtungen des Flugkörpers, mithin also Gierlage, Nicklage und Rolllage des Flugkörpers.

Für eine entsprechende Flugsteuerung können beispielsweise aus den Sensordaten des Seitensichtsensors gewonnene Informationen zur Position, Orientierung und Geschwindigkeit des Zielobjekts herangezogen werden. Hierbei kann beispielsweise eine prädiktive Lenkungssteuerung eingesetzt werden, die dazu eingerichtet ist, den Begegnungsort des Flugkörpers mit dem Zielobjekt zu schätzen bzw. einen auf den jeweils verfügbaren Daten wahrscheinlichen Begegnungsort zu ermitteln, und die ferner dazu eingerichtet ist, den Begegnungswinkel, insbesondere den Polarwinkel des Mitten- bzw. Zentralachsenvektors des Sichtfelds, auf das Zielobjekt einzustellen. Unter dem Begriff prädiktive Lenkungssteuerung soll dabei eine Lenkungssteuerung verstanden werden, die gestützt ist auf voraussichtliche, d.h. prädiktive, Daten zum Begegnungsort und/oder zur Begegnungssituation betreffend das Zielobjekt und den Flugkörper.

Mithin kann mit einer entsprechenden prädiktiven Lenkungssteuerung die Flugbahn des Flugkörpers derart gesteuert werden, dass, basierend auf den jeweils vorhandenen Daten zum Zielobjekt und zum Flugkörper, ein wahrscheinlicher Begegnungsort im Sinne einer Prädiktion existiert, und dass das Zielobjekt bei der Zielnavigation trotz der seitlichen Ausrichtung des Sichtfelds des Seitensichtsensors im Sichtfeld des Seitensichtsensors verbleibt.

Ändern sich Orientierung, Position und Geschwindigkeit des Zielobjekts und spiegeln sich entsprechende Änderungen in erfassbarer Weise in den Sensordaten des Seitensichtsensors wider, kann die prädiktive Lenkungssteuerung die Orientierung bzw. Ausrichtung des Flugkörpers, sprich die Flugbahn, bei gleichzeitiger Einstellung einer für die Zielerfassung durch den Seitensichtsensor günstigen Flugkörperlage adaptiv anpassen, so dass die folgenden beiden Randbedingungen erfüllt sind: i) es liegt ein zukünftiger Begegnungsort vor und ii) das Zielobjekt ist durch den Seitensichtsensor erfassbar. Unter einer adaptiven Anpassung soll dabei insbesondere verstanden werden, dass die Anpassung in Abhängigkeit und in Reaktion auf die Änderungen in Orientierung, Position und Geschwindigkeit des Zielobjekts erfolgt.

Durch eine Anpassung der Rolllage des Flugkörpers ist es beispielsweise möglich, den Flugkörper und damit den Seitensichtsensor derart zu positionieren und auszurichten, dass das Zielobjekt in dem vom Sichtfeld überstrichenen Azimutwinkelbereich gelegen ist. Durch eine Anpassung der Nicklage und/oder Gierlage, insbesondere durch eine Anpassung des Flugwinkels zum Zielobjekt, ist es möglich, die Flugbahn so einzustellen, dass das Zielobjekt in dem vom Sichtfeld überstrichenen Polarwinkelwinkelbereich gelegen ist, verbleibt oder erscheint.

Für eine prädiktive Lenkungssteuerung eignet sich beispielsweise, aber nicht ausschließlich, eine sog. "Trajectory Shaping Guidance", bekannt beispielsweise aus: Paul Zarchan, 2007, Tactical and Strategic Missile Guidance, 5th Edition, ISBN-10: 1-56347-874-9, Kapitel 25.

Eine entsprechende prädiktive Lenkungssteuerung erfolgt dabei zumindest in der finalen Zielführungsphase, insbesondere einer Abfangphase, wobei eine prädiktive Lenkungssteuerung jedoch auch in vorgeschalteten Flugphasen eingesetzt werden kann.

Sofern trotz der prädiktiven Lenkungssteuerung das Zielobjekt aus dem Sichtfeld des Seitensichtsensors gelangen sollte, beispielsweise auf Grund von Ausweichmanövern des Zielobjekts, können wiederum zusätzlich empfangene, aktualisierte Zielobjekt-Daten und/oder weitere Sensordaten einer zusätzlichen Zielerfassungseinheit mit einem zum Flugkörper konzentrischen Sichtfeld und/oder weitere Daten zur Position und Ausrichtung des Flugkörpers, z.B. GNSS-Daten (GNSS: globales Navigations-Satelliten-System), verwendet werden, um die Orientierung des Flugkörpers so einzustellen, dass das Zielobjekt wieder in das Sichtfeld des Seitensichtsensors gelangt.

Aus den vorangehenden Ausführungen ergibt sich insbesondere, dass mit der vorgeschlagenen Flugkörpersteuerung eine vergleichbar genaue und zuverlässige Zielführung möglich ist, trotz eines bezüglich der Flugkörperachse seitlich orientierten und nicht zur Flugkörperachse konzentrischen Sichtfelds des Seitensichtsensors. Ferner kann bei Implementierung einer Seitensichtsensoreinheit, beispielsweise im Bereich des Flugkörperrumpfs, erreicht werden, dass der Flugkörperkopf für weitere, von der Zielerfassung verschiedene Funktionalisierungen zur Verfügung steht.

Nach Ausgestaltungen kann die Steuereinheit dazu eingerichtet sein, basierend auf den empfangenen Zielobjekt-Daten, die beispielsweise als repräsentativ für Vorwissen zu Positions-, Orientierungs- und/oder Bewegungsdaten, wie z.B. die Geschwindigkeit, des Zielobjekts angesehen werden können, die Orientierung des Flugkörpers durch aktive Steuerung des Nick-, Gier- und/oder Rollwinkels des Flugkörpers derart einzustellen, dass das Zielobjekt zumindest in Abschnitten der Zielführung, beispielsweise in einer finalen Zielführungsphase, innerhalb des vom Sichtfeld des Seitensichtsensors bezüglich der durch die Längsachse des Flugkörpers definierten Polachse überstrichenen Azimutwinkelbereichs liegt.

Insbesondere kann die Steuereinheit derart eingerichtet sein, dass der Rollwinkel und damit die Rolllage, derart eingestellt werden, dass das Zielobjekt, insbesondere die Ränder des Zielobjekts, einen vorgegebenen Abstand zu den in Azimutwinkelrichtung gelegenen Rändern des Sichtfelds aufweist/aufweisen. Dadurch kann die Robustheit der Detektion des Zielobjekts, d.h. der Objekterfassung, und der Zielführung gegenüber plötzlich erfolgenden Ausweichmanövern des Zielobjekts verbessert werden. Der vorgegebene Abstand kann beispielsweise derart gewählt sein, dass dieser zumindest so groß ist wie der in Azimutwinkelrichtung und/oder Polarwinkelrichtung gegebene oder zu erwartende Fehler der Objekterfassung der empfangenen Zielobjekt-Daten und/oder des Seitensichtsensors.

Nach Ausgestaltungen kann die Steuereinheit der Flugkörpersteuerung dazu eingerichtet sein, basierend auf den Zielobjekt-Daten, beispielsweise repräsentativ für Vorwissen zu Positions-, Orientierungs- und/oder Bewegungsdaten des Zielobjekts, die Flugbahn und/oder Orientierung des Flugkörpers derart einzustellen, dass das Zielobjekt zumindest in Abschnitten der Zielführung, insbesondere in einer finalen Zielführungsphase, innerhalb des vom Sichtfeld bezüglich der durch die Längsachse definierten Polachse überstrichenen Polarwinkelbereichs liegt.

Insbesondere kann die Steuereinheit derart eingerichtet sein, dass die Orientierung, beispielsweise die Ausrichtung der Längsachse des Flugkörpers, derart einstellbar ist, dass das Zielobjekt, insbesondere die Ränder des Zielobjekts, einen vorgegebenen Abstand zu den in Polarwinkelrichtung und Azimutwinkelrichtung gelegenen Sichtfeldrändern des Sichtfelds aufweist/aufweisen. Dadurch kann die Robustheit der Detektion des Zielobjekts, d.h. der Objekterfassung, und der Zielführung gegenüber plötzlich erfolgenden Ausweichmanövern des Zielobjekts verbessert werden. Der vorgegebene Abstand kann beispielsweise derart gewählt sein, dass dieser zumindest so groß ist, wie der jeweils in Polarwinkelrichtung und Azimutwinkelrichtung gegebene oder zu erwartende Fehler der Objekterfassung bzw. der Zielobjekterkennung, sei es basierend auf den empfangenden Zielobjekt-Daten oder basierend auf den Sensordaten des Seitensichtsensors.

Nach Ausgestaltungen ist der Seitensichtsensor derart eingerichtet, dass die Richtcharakteristik des Seitensichtsensors, beispielsweise der vom Sichtfeld überstrichene Azimutwinkelbereich, der vom Sichtfeld überstrichene Polarwinkelbereich und/oder die Ausrichtung der Mittenachse des Sichtfelds des Seitensichtsensors, durch die Flugkörpersteuerung anpassbar ist/sind.

Beispielsweise können ein oder mehrere mit einem Sensor oder einem Sensorfeld des Seitensichtsensors aktuatorisch verbundene Aktuatoren vorhanden sein, die beispielsweise durch eine entsprechend eingerichtete Steuereinheit derart steuerbar sind, dass die Ausrichtung hinsichtlich des erfassbaren Polarwinkelbereichs und/oder Azimutwinkelbereichs anpassbar, insbesondere einstellbar, ist/sind. Entsprechende Aktuatoren können beispielsweise bei optischen oder auf Basis von Infrarot-Licht operierenden Sensoren oder Sensorfeldern zur Veränderung oder Einstellung der Ausrichtung des Sichtfelds verwendet werden.

Möglich ist es hingegen auch, dass die Richtcharakteristik, z.B. die Ausrichtung, der Polarwinkelbereich und/oder der Azimutwinkelbereich, des Seitensichtsensors, beispielsweise eines Seitensichtsensorfelds mit mehreren Seitensichtsensoren, durch Verändern der Betriebsparameter des Seitensichtsensors oder des Seitensichtsensorfelds angepasst, insbesondere eingestellt, wird. Beispielsweise kann die Richtcharakteristik durch Verändern der Frequenz bei frequenzschwenkenden Antennen in geeigneter Weise eingestellt werden. Die vorgeschlagenen Steuereinheiten eignen sich beispielsweise für Radarsensoren, bei welchen die Richtcharakteristik beispielsweise durch Anpassen der Frequenz, Phase und/oder Amplitude angepasst werden kann. Jeweilige Steuerfunktionen können beispielsweise durch die weiter oben bereits genannte Steuereinheit der Flugkörpersteuerung übernommen werden. Alternativ können auch ein oder mehrere zusätzliche Steuereinheiten vorhanden sein, die eine Einstellung der Richtcharakteristik des Seitensichtsensors durchführen können.

Nach Ausgestaltungen sind der Seitensichtsensor und insbesondere eine korrespondierende Steuereinheit dazu eingerichtet, die Richtcharakteristik des Seitensichtsensors basierend zumindest auf Sensordaten des Seitensichtsensors derart anzupassen, insbesondere einzustellen, dass das Zielobjekt zumindest abschnittsweise längs der Flugbahn des Flugkörpers innerhalb des Sichtfelds des Seitensichtsensors gelegen ist.

Mit einer entsprechend eingerichteten Steuereinheit und einem entsprechend eingerichteten Seitensichtsensor kann die Robustheit der Zielerfassung und Zielführung verbessert werden.

Nach Ausgestaltungen kann die Steuereinheit eingerichtet sein, ein im Sichtfeld gelegenes Zielobjekt, insbesondere das Zielobjekt als solches, zu erfassen, und dessen Position, Orientierung und/oder Geschwindigkeit basierend auf Sensordaten des Seitensichtsensors zu ermitteln. Ferner kann die Steuereinheit eingerichtet sein, basierend auf der ermittelten Position, Orientierung und/oder Geschwindigkeit des Zielobjekts eine Flugbahn zum adaptiv aktiven, prädiktiven Lenken des Flugkörpers zu einem voraussichtlichen Begegnungsort mit dem Zielobjekt zu ermitteln. Basierend auf der ermittelten Flugbahn kann der Flugkörper durch die Flugkörpersteuerung zum voraussichtlichen, d.h. prädiktiven, Begegnungsort mit dem Zielobjekt gelenkt werden. Bei der Ermittlung der Flugbahn können neben den Sensordaten des Seitensichtsensors ferner weitere Daten, beispielsweise zu Orientierung, Position und/oder Geschwindigkeit des Flugkörpers, berücksichtigt werden.

Nach Ausgestaltungen kann die Steuereinheit dazu eingerichtet sein, im Rahmen des adaptiv aktiven, prädiktiven Lenkens zumindest einen der folgenden Schritte, beispielsweise in iterativer Weise, auszuführen:
- prädiktives Ermitteln des voraussichtlichen Begegnungsorts des Flugkörpers mit dem Zielobjekt und Ermitteln eines Begegnungswinkels des Flugkörpers mit dem Zielobjekt derart, dass das Sichtfeld eine direkte Sichtlinie auf das Zielobjekt umfasst;
- prädiktives Ermitteln der Flugbahn und/oder der Orientierung des Flugkörpers, insbesondere hinsichtlich Roll-, Nick- und/oder Gierwinkel des Flugkörpers, derart, dass in Azimut- und/oder Polarwinkelrichtung bezüglich der Längsachse des Flugkörpers als Polachse das Zielobjekt einen vorgegebenen Abstand zu Sichtfeldrändern des Sichtfelds aufweist, vorzugsweise derart, dass das Zielobjekt in Azimut- und/oder Polarwinkelrichtung etwa mittig des Sichtfelds gelegen ist.

Dabei soll unter dem Begegnungswinkel insbesondere der zwischen einer Trajektorie des Zielobjekts und der Trajektorie des Flugkörpers gemessene Winkel verstanden werden.

Der vorgegebene Abstand kann dabei derart gewählt sein, dass das Zielobjekt zuzüglich des Fehlers der Erfassung der Sensordaten des Seitensichtsensors oder des Fehlers der Zielobjekt-Daten im Sichtfeld gelegen ist. Durch geeignet gewählte Abstände und mittiges Ausrichten der direkten Sichtlinie im Sichtfeld können für die Zielführung insbesondere Vorteile hinsichtlich plötzlicher Ausweichmanöver des Zielobjekts erreicht werden, denn bei mittig im Sichtfeld gelegenem Zielobjekt ist die Wahrscheinlichkeit, dass ein spontanes Ausweichmanöver dazu führt, dass das Zielobjekt aus dem Sichtfeld gelangt, vergleichsweise gering. Insbesondere kann die Zielführung in einer Abfangphase der Zielführung robust gegenüber plötzlichen Ausweichmanövern des Zielobjekts gemacht werden.

Nach Ausgestaltungen kann die Flugkörpersteuerung des Weiteren, d.h. zusätzlich zu dem zumindest einen Seitensichtsensor, zumindest einen Zielsuchsensor mit einem zur Längsachse des Flugkörpers konzentrischem Sichtfeld umfassen. Dabei soll der Zielsuchsensor mit konzentrischem Sichtfeld insbesondere Zielsuchsensoren umfassen, bei denen das Sichtfeld bezüglich der Mittenachse des Sichtfelds konzentrisch zur Längsachse des Flugkörpers ausgerichtet ist oder konzentrisch ausrichtbar ist. Bei solchen Ausgestaltungen kann die Flugkörpersteuerung, insbesondere eine Steuereinheit der Flugkörpersteuerung, dazu eingerichtet sein, zur Zielführung des Flugkörpers, insbesondere zur Erfassung des Zielobjekts, des Weiteren von dem Zielsuchsensor erfasste Daten zu verwenden, beispielsweise Umgebungsdaten, Geländedaten und/oder Daten zum Zielobjekt, wie Position, Orientierung und/oder Geschwindigkeit.

Bei Verwendung eines zusätzlichen Zielsuchsensors mit konzentrischem Sichtfeld zur Längsachse des Flugkörpers kann die Zielführung weiter verbessert werden.

Derartige Zielsuchsensoren mit einem zur Längsachse des Flugkörpers konzentrischen Sichtfeld, insbesondere mit einem zur Längsachse des Flugkörpers konzentrisch ausrichtbaren Sichtfeld, können beispielsweise in bekannter Weise in der Flugkörperspitze integriert oder montiert sein. Werden solche Zielsuchsensoren im Rahmen der vorliegenden Erfindung nicht verwendet, kann die Flugkörperspitze in anderer Weise funktionalisiert werden, beispielsweise mittels eines Hitzeschilds und dergleichen.

Nach Ausgestaltungen kann der Seitensichtsensor bzw. der Zielsuchsensor einen oder mehrere optische Sensoren, einen oder mehrere Infrarot-Sensoren und/oder einen oder mehrere Radarsensoren umfassen. Bei derartigen Ausgestaltungen kann die Flugkörpersteuerung, insbesondere eine Steuereinheit der Flugkörpersteuerung, dazu eingerichtet sein, aus Sensordaten jeweiliger Sensoren die Position, die Orientierung und/oder die Geschwindigkeit eines detektierten Zielobjekts zu ermitteln. Auch ist es in Ausgestaltungen möglich, dass die Flugkörpersteuerung dazu eingerichtet ist, aus den Sensordaten Informationen zur Umgebung, beispielsweise eines Geländereliefs, zu ermitteln, und bei der Zielführung, beispielsweise zur Ermittlung bzw. Berechnung der Flugbahn, der Orientierung des Flugkörpers, des Begegnungswinkels und/oder der Gier-, Nick-, und/oder Rolllage des Flugkörpers, zu berücksichtigen.

Nach Ausgestaltungen kann die Flugkörpersteuerung ferner dazu eingerichtet sein, den bezüglich der Längsachse des Flugkörpers als Polachse definierten Azimutwinkelbereich des Sichtfelds und den bezüglich der Längsachse des Flugkörpers als Polachse definierten Polarwinkelbereich des Sichtfelds derart einzustellen und/oder die Flugbahn und die Orientierung des Flugkörpers derart zu steuern, dass wenigstens eine der folgenden Bedingungen erfüllt ist/sind:
- der Azimutwinkelbereich und/oder der Polarwinkelbereich werden/wird umso größer eingestellt, je größer der Fehler der Ermittlung von Position, Orientierung und/oder Geschwindigkeit des Zielobjektes ist;
- der Azimutwinkelbereich und/oder der Polarwinkelbereich werden/wird in einer finalen Zielführungsphase, insbesondere in einer Abfangphase, derart eingestellt, dass diese/r größer sind/ist, als der Fehler der Ermittlung von Position, Orientierung und/oder Geschwindigkeit des Zielobjektes;
- der Azimutwinkelbereich und/oder der Polarwinkelbereich werden/wird umso größer eingestellt, je größer die Geschwindigkeit des Zielobjekts ist;
- der bezüglich der Längsachse des Flugkörpers als Polachse definierte Polarwinkel der Mittenachse des Sichtfelds wird abhängig von einer ermittelten Geschwindigkeit des Zielobjekts eingestellt, wobei der Polarwinkel umso kleiner eingestellt wird, je kleiner die Geschwindigkeit des Zielobjekts ist.

Als Maß für den Fehler kann beispielsweise der sich aus den Sensordaten bzw. den Zielobjekt-Daten ergebende Fehler verwendet werden. Der Fehler kann beispielsweise in Form von Metadaten mit den entsprechenden Daten verknüpft und übermittelt werden.

Bei einem Betrieb der Flugkörpersteuerung entsprechend einer der vorgenannten Bedingungen kann beispielsweise in der finalen Zielführungsphase, insbesondere in einer Abfangphase, eine vergleichsweise zuverlässige Zielführung hin zum voraussichtlichen Begegnungsort erfolgen.

Nach Ausgestaltungen ist ein Flugkörper, insbesondere ein Lenkflugkörper, vorgesehen, der eine Flugkörpersteuerung nach einem der hierin erfindungsgemäß beschriebenen Ausgestaltungen umfasst. Die Flugkörpersteuerung kann beispielsweise so montiert bzw. integriert sein, dass diese zwischen kopfseitigem und antriebsseitigem Ende des Flugkörpers positioniert ist.

Beispielsweise kann die Flugkörpersteuerung bei einem Lenkflugkörper im Bereich des Lenkteils des Lenkflugkörpers angeordnet, insbesondere montiert oder integriert, sein, auf dem, basierend auf entsprechenden Steuereinheiten, Algorithmen zur Lenkung des Flugkörpers ausgeführt werden können. Eine derartige Positionierung der Flugkörpersteuerung hat insbesondere den Vorteil, dass zwischen den Steuereinheiten des Lenkteils und der Steuereinheit der Flugkörpersteuerung vergleichsweise kurze Signalwege umgesetzt werden können. Die Steuereinheit der Flugkörpersteuerung kann in Ausgestaltungen zumindest teilweise mit dem Lenkteil funktional integriert ausgebildet sein.

Nach Ausgestaltungen kann die Mittenachse des Sichtfelds bezüglich der Längsachse des Flugkörpers eine Radialkomponente und eine Axialkomponente aufweisen. Der Seitensichtsensor kann bezüglich der Längsachse des Flugkörpers derart angeordnet sein, insbesondere montiert oder integriert sein, dass die Radialkomponente im Wesentlichen parallel zu einer Manöverebene des Flugkörpers ausgerichtet ist, in welcher die Querbeschleunigungsfähigkeit des Flugkörpers ein Maximum aufweist. Das bedeutet, dass die Radialkomponente parallel zu einer starken Manöverebene des Flugkörpers ausgerichtet ist. Die Axialkomponente kann parallel zur Längsachse des Flugkörpers ausgerichtet sein.

Unter einer Manöverebene des Flugkörpers wird eine Ebene verstanden, in der ein Flugkörper in einer jeweiligen Bewegungssituation ein Flugmanöver ausführt. Bei einem Lenkflugkörper können die Manöverebenen als Lenkebenen bezeichnet werden. Beispielsweise liegt bei angenommen horizontalem Flug des Flugkörpers eine Gierbewegung in einer zur Längsachse des Flugkörpers parallelen, horizontalen Manöverebene, sprich in einer horizontalen Gierebene. Entsprechend liegt bei einer Nickbewegung die Manöverebene bei angenommen horizontalem Flug des Flugkörpers in einer zur Längsachse des Flugkörpers parallelen, vertikalen Manöverebene, sprich in einer Nickebene. Entsprechendes gilt für beliebige Flugbewegungen und Flugmanöver des Flugkörpers.

Eine Ausrichtung der Radialkomponente parallel zu einer starken Manöverebene ist insbesondere hinsichtlich einer adaptiv prädiktiven Lenkung des Flugkörpers bei plötzlichen Ausweichmanövern des Zielobjekts von Vorteil, denn dann kann der Flugkörper die Ausrichtung des Seitensichtsensors vergleichsweise schnell an geänderte Bedingungen betreffend die Position, Orientierung und/oder Geschwindigkeit des Zielobjekts anpassen. Eine Anpassung an sich jeweils ändernde Bedingungen soll insbesondere als eine adaptive Lenkung angesehen werden. Der Begriff "prädiktiv" soll insbesondere bedeuten, dass die Lenkung auf Grundlage eines voraussichtlichen, d.h. prädiktiven, Begegnungsorts erfolgt.

Nach Ausgestaltungen ist ein Verfahren zur Zielführung eines Flugkörpers, insbesondere eines Lenkflugkörpers, nach einem der hierin im Rahmen der zu Grunde liegenden Erfindung beschriebenen Ausgestaltungen vorgesehen. Das Verfahren umfasst dabei eine Zielführung des Flugkörpers längs einer Flugbahn zu einem ruhenden oder bewegten Zielobjekt.

Nach Ausgestaltungen umfasst das Verfahren zumindest die folgenden, von der Flugkörpersteuerung des Flugkörpers ausgeführten Schritte:
- Empfangen von Daten zur Position, Orientierung und Geschwindigkeit des Zielobjekts;
- Ausrichten des Sichtfelds des Seitensichtsensors auf das Zielobjekt durch Ausrichten des Seitensichtsensors durch Steuern der Richtcharakteristik des Seitensichtsensors, durch Ausrichten des Flugkörpers und/oder durch Einstellen der Flugbahn des Flugkörpers basierend auf den empfangenen Daten derart, dass das Zielobjekt in einer ersten Flugphase in das Sichtfeld des Seitensichtsensors gelangt, insbesondere im Sichtfeld des Seitensichtsensors liegt; und,
- während einer auf die erste Flugphase folgenden zweiten Flugphase, Ausrichten des Sichtfelds auf das Zielobjekt durch Steuerung der Richtcharakteristik des Seitensichtsensors, der Orientierung und/oder der Flugbahn des Flugkörpers basierend auf den Sensordaten des Seitensichtsensors derart, dass das Zielobjekt im Sichtfeld gelegen ist, insbesondere im Sichtfeld verbleibt.

Nach Ausgestaltungen kann zum Ausrichten des Sichtfelds auf das Zielobjekt der Roll-, Nick- und/oder Gierwinkel des Flugkörpers adaptiv aktiv eingestellt werden, insbesondere bei Bedarf geeignet verändert werden, basierend auf den ermittelten Sensordaten des Seitensichtsensors.

Nach Ausgestaltungen wird das Sichtfeld derart ausgerichtet, dass das Zielobjekt zumindest abschnittsweise in den Flugphasen, vorzugsweise in einer finalen Zielführungsphase, innerhalb des vom Sichtfeld bezüglich der durch die Längsachse des Flugkörpers definierten Polachse überstrichenen Azimutwinkelbereichs und/oder Polarwinkelbereichs liegt.

Nach Ausgestaltungen können die jeweiligen Winkel, sprich Roll-, Nick- und/oder Gierwinkel, derart eingestellt werden, dass das Zielobjekt von den in Azimutwinkel- bzw. Polarwinkelrichtung gelegenen Sichtfeldrändern einen vorgegebenen Abstand aufweist. Dabei kann der Abstand größer sein als der Fehler der Zielobjekterkennung, d.h. der Fehler der Erkennung von Zielobjekt-Daten, wie beispielsweise der Position, der Orientierung, der Geschwindigkeit, der Größe und/oder des Umrisses des Zielobjekts.

Nach Ausgestaltungen kann das Verfahren des Weiteren umfassen:
adaptiv aktives Lenken des Flugkörpers, basierend auf einer aus Sensordaten des Seitensichtsensors ermittelten Position, Orientierung und/oder Geschwindigkeit des Zielobjekts, wobei das adaptiv aktive Lenken zumindest einen der folgenden Schritte umfasst:
- Ermitteln eines Begegnungsorts, insbesondere eines voraussichtlichen Begegnungsorts, des Flugkörpers mit dem Zielobjekt, insbesondere in einer finalen Flugphase, und Einstellen eines Flugwinkels des Flugkörpers relativ zum Zielobjekt derart, dass das Sichtfeld des Seitensichtsensors eine direkte Sichtlinie auf das Zielobjekt umfasst, wobei die direkte Sichtlinie beispielsweise im Wesentlichen mit der Mittenachse des Sichtfelds übereinstimmen kann;
- Ermitteln der Flugbahn und/oder der Orientierung, insbesondere der Ausrichtung wie Roll- Nick-, Gierlage, des Flugkörpers und/oder des Flugwinkels relativ zum Zielobjekt derart, dass in Azimut- und/oder Polarwinkelrichtung das Zielobjekt einen vorgegebenen Abstand zu jeweiligen Sichtfeldrändern des Sichtfelds aufweist, vorzugsweise derart, dass in Azimut- und/oder Polarwinkelrichtung das Zielobjekt etwa mittig im Sichtfeld gelegen ist;
- Erfassen von Sensordaten mittels eines vom Seitensichtsensor verschiedenen Zielsuchsensors mit einem konzentrisch zur Längsachse des Flugkörpers ausgerichteten Sichtfeld und Ermitteln der Flugbahn, der Orientierung und/oder des Flugwinkels des Flugkörpers basierend des Weiteren zumindest teilweise auf den Sensordaten des Zielsuchsensors mit konzentrisch zur Längsachse ausgerichtetem Sichtfeld.

Die Sensordaten des weiteren Zielsuchsensors können, sofern dieser bereits das Zielobjekt erfassen kann, beispielsweise auch in der ersten Flugphase dazu verwendet werden, den Flugkörper so auszurichten, dass der Seitensichtsensor das Zielobjekt erfassen kann, wobei in Ausgestaltungen nach erfolgter Ausrichtung des Seitensichtsensors Sensordaten beider Sensoren zur Zielführung herangezogen werden können.

Nach Ausgestaltungen kann/können zumindest basierend auf Sensordaten des Seitensichtsensors und/oder des Zielsuchsensors Position, Orientierung und/oder Geschwindigkeit des Zielobjekts ermittelt werden, wobei die Sensordaten beispielsweise Daten zumindest eines Infrarot-Sensors, zumindest eines optischen Sensors und/oder zumindest eines Radarsensors umfassen können.

Basierend auf der ermittelten Position, umfassend beispielsweise auch Daten zur Größe und/oder zum Umriss des Zielobjekts, der ermittelten Orientierung und/oder der ermittelten Geschwindigkeit des Zielobjekts kann nach Ausgestaltungen zumindest einer der folgenden Schritte ausgeführt werden:
- Einstellen oder Steuern der Orientierung und/oder der Flugbahn des Flugkörpers basierend auf der ermittelten Position, Orientierung und/oder Geschwindigkeit des Zielobjekts;
- Einstellen eines umso größeren Azimutwinkelbereichs für den Seitensichtsensor, je größer der Fehler bei der Ermittlung von Position, Orientierung und/oder Geschwindigkeit des Zielobjektes ist;
- Einstellen des Azimutwinkelbereichs des Seitensichtsensors derart, dass dieser zumindest in einer finalen Zielführungsphase größer ist, als der Fehler der Ermittlung von Position, Orientierung und/oder Geschwindigkeit des Zielobjektes;
- Einstellen des Azimutwinkelbereichs und/oder des Polarwinkelbereichs des Seitensichtsensors in Abhängigkeit der ermittelten Geschwindigkeit des Zielobjekts;
- Einstellen des Polarwinkels der Mittenachse des Sichtfelds in Abhängigkeit der ermittelten Geschwindigkeit des Zielobjekts, wobei der Polarwinkel der Mittenachse umso kleiner eingestellt wird, je kleiner die Geschwindigkeit des Zielobjekts ist.

Nach Ausgestaltungen kann der Schritt des Ausrichtens des Sichtfelds des Seitensichtsensors des Weiteren umfassen: Einstellen des einstellbar eingerichteten Azimutwinkelbereichs, des einstellbar eingerichteten Polarwinkelbereichs und/oder Ausrichten der ausrichtbar eingerichteten zentralen Sichtfeldachse des Sichtfelds, wobei das Einstellen und/oder Ausrichten basierend zumindest auf Sensordaten des Seitensichtsensors insbesondere derart erfolgt, dass das Zielobjekt zumindest abschnittsweise längs der Flugbahn innerhalb des Sichtfelds gelegen ist.

Verfahrensseitige Vorteile ergeben sich insbesondere aus den vorrichtungsseitigen Vorteilen der Erfindung.

An dieser Stelle sei explizit darauf hingewiesen, dass funktionelle und/oder strukturelle Merkmale von Ausgestaltungen der erfindungsgemäßen Flugkörpersteuerung und des Flugkörpers und verfahrensseitige Merkmale von Ausgestaltungen des erfindungsgemäßen Verfahrens, sofern nicht bereits explizit beschrieben, dann zumindest jedoch basierend auf den Rückbezügen in den Patentansprüchen, auch in der jeweils anderen Kategorie umgesetzt und beansprucht werden können.

Der im Rahmen der Beschreibung von erfindungsgemäßen Ausgestaltungen und Ausführungsformen sowie in den Ansprüchen verwendete Begriff "insbesondere" soll nicht einschränkend verstanden werden, sondern (lediglich) dahingehend, dass die durch "insbesondere" gekennzeichneten Merkmale, sofern nicht anderweitig angegeben, spezielle Ausgestaltungen oder Ausführungsformen betreffen.

Beispielhafte Ausgestaltungen der Erfindung werden nachfolgend anhand der Figuren beschrieben. Es zeigen:
- FIG. 1: einen Lenkflugkörper mit Seitensichtsensor;
- FIG. 2: eine Seitenprofilansicht im Bereich der Lenkflugkörperspitze bezüglich einer durch die Polachse verlaufenden Polar-Hauptebene;
- FIG. 3: eine zur Seitenprofilansicht der FIG. 2 senkrechte Schnittprofilansicht des Flugkörpers 1 bezüglich der senkrecht durch die Polachse verlaufenden Azimut-Hauptebene;
- FIG. 4: die Projektionsansicht der FIG. 2 mit einem außerhalb des Sichtfelds gelegenen Zielobjekt;
- FIG. 5: eine Projektionsansicht gemäß FIG. 2 mit dem im Sichtfeld gelegenen Zielobjekt;
- FIG. 6: eine schematische Darstellung eines sich längs einer Flugbahn bewegenden Flugkörpers;
- FIG. 7: eine schematische Darstellung zum Montageort des Seitensichtsensors am Lenkflugkörper;
- FIG. 8 und 9: ein Ausführungsbeispiel zur Anordnung von Radarantennen bei einem Seitensichtsensor; und
- FIG. 10: eine Schaltungsanordnung betreffend einen Seitensichtsensor nach dem Ausführungsbeispiel der FIG. 9.

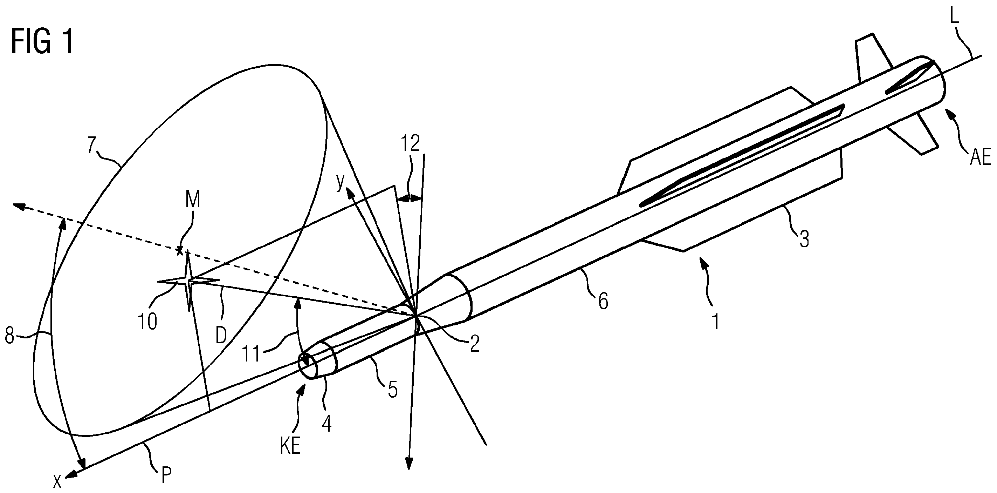

FIG. 1 zeigt ein Ausführungsbeispiel eines erfindungsgemäß ausgebildeten Flugkörpers 1, wobei es sich bei dem Flugkörper 1 beispielhaft um einen Lenkflugkörper 1 handelt. Der Flugkörper 1 umfasst einen Seitensichtsensor 2.

Der Flugkörper 1 weist einen Antrieb 3 auf, der ein antriebsseitiges Ende AE des Flugkörpers 1 definiert. An dem davon in Richtung der Längsachse L abgewandten Ende, weist der Flugkörper 1 einen Flugkörperkopf 4 auf, der ein kopfseitiges Ende KE definiert. Am antriebsseitigen Ende AE weist der Flugkörper 1 mehrere nicht näher bezeichnete Flossen zur Lenkung bzw. zur Flugstabilisierung auf.

An einem sich an den Flugkörperkopf 4 anschließenden Segment weist der Flugkörper 1 in Richtung des antriebsseitigen Endes AE ein Lenkteil 5 auf, an das sich zum Antrieb 3 hin ein Gefechtskopf 6 anschließt. Abgesehen von Antrieb 3 und Flugkörperkopf 4 kann der Aufbau in Längsrichtung des Flugkörpers 1 auch vom gezeigten Aufbau abweichen.

Das Lenkteil 5 umfasst eine oder mehrere Steuereinheiten zur Lenkung des Flugkörpers 1. Der Seitensichtsensor 2 ist im vorliegenden Beispiel im Bereich des Lenkteils montiert, wobei zugehörige Sensoren an einer längsseitigen Umfangsfläche integriert sind. Das bietet den Vorteil kurzer Signalwege, beispielsweise zwischen Seitensichtsensor 2, einer zugeordneten Flugkörpersteuerung und den Steuereinheiten des Lenkteils 5. Darüber hinaus können auch aerodynamische Vorteile gegenüber anderweitiger Montage erreicht werden.

Der Seitensichtsensor 2 weist, wie durch den Kegel in FIG. 1 angedeutet ist, ein zur Längsachse L nicht konzentrisches Sichtfeld 7 auf.

Das Sichtfeld 7 ist im dargestellten Beispiel durch ein flugkörperfestes rechtshändiges Kugelkoordinatensystem beschrieben, dessen Ursprung an einer Sensorfläche eines Sensors des Seitensichtsensors 2 liegt. Dieses Kugelkoordinatensystem weist eine parallel zur Längsachse L verlaufende Polachse P auf, wobei die Richtung der positiven Polachse P durch die von antriebsseitigem Ende AE zu kopfseitigem Ende KE verlaufende Richtung definiert ist. Ein in positiver Richtung der Polachse P verlaufender Vektor wird nachfolgend und hierin auch als Polachsenvektor bezeichnet.

Das Sichtfeld 7 ist im gezeigten Beispiel konzentrisch zu einer Mittenachse M, wobei der vom Koordinatenursprung des Kugelkoordinatensystems ausgehende, vom Flugkörper 1 wegweisende und durch die Mittenachse M verlaufende Vektor nachfolgend als Mittenachsenvektor bezeichnet wird.

Der zwischen dem Polachsenvektor und dem Mittenachsenvektor definierte Mittenachsen-Polarwinkel 8 ist im gezeigten Beispiel ein spitzer, von Null verschiedener, positiver Winkel.

In Umfangsrichtung zum Polachsenvektor verlaufende Winkel werden nachfolgend mit Azimutwinkel bezeichnet.

Wie aus FIG. 1 erkennbar ist, weist der Seitensichtsensor 2 in Richtung parallel zum Polachsenvektor ein seitlich ausgerichtetes Sichtfeld 7 auf, wobei insoweit das Sichtfeld 7 in Richtung des Polachsenvektors beschränkt ist, jedenfalls nicht konzentrisch zum Polachsenvektor ist.

Schematisch und beispielhaft und ohne maßstabsgetreue Wiedergabe des tatsächlichen Abstands ist in FIG. 1 ein im Sichtfeld 7 gelegenes Zielobjekt 10 dargestellt.

Im Koordinatensystem des Seitensichtsensors 2 kann die Position des Zielobjekts 10 durch den Abstand D zum Koordinatenursprung, dem Polarwinkel Theta, bezeichnet mit 11, und dem Azimutwinkel Phi, bezeichnet mit 12, beschrieben werden.

Wird beispielsweise ein Radarsensor für den Seitensichtsensor 2 verwendet, können der Abstand D, der Polarwinkel Theta 11 und der Azimutwinkel Phi 12 sowie andere Parameter, wie beispielsweise Lage, Position, Orientierung und/oder Geschwindigkeit des Zielobjekts 10, in bekannter Weise aus Radarsignalen ermittelt werden, die am Zielobjekt 10 reflektiert und vom Seitensichtsensor 2 empfangen werden. Analoges gilt für andere Sensorarten wie Infrarot-Sensoren und optische Sensoren, die für den Seitensichtsensor 2 ebenso in Frage kommen.

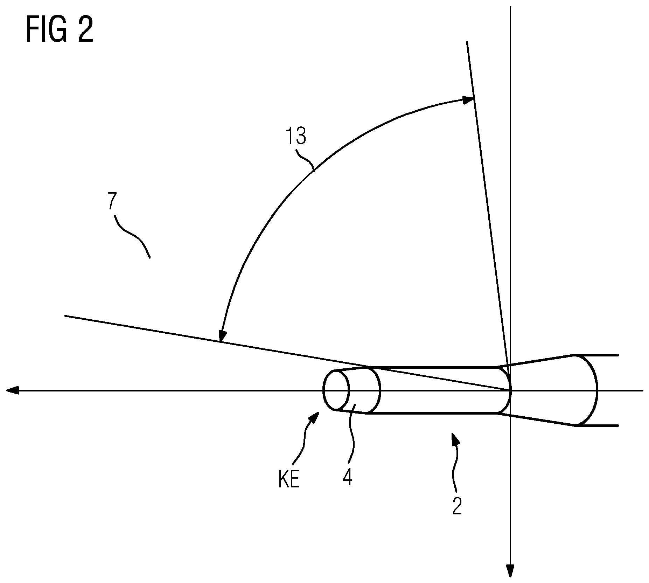

FIG. 2 zeigt eine Seitenprofilansicht des Flugkörpers 1 im Bereich der Flugkörperspitze, d.h. des kopfseitigen Endes KE, bezüglich der durch die Polachse P und den Koordinatenursprung verlaufenden Polar-Hauptebene des Kugelkoordinatensystems. Wie aus der FIG. 2 ersichtlich ist, überstreicht das Sichtfeld 2 in der Polar-Hauptebene einen bestimmten Polarwinkelbereich 13.

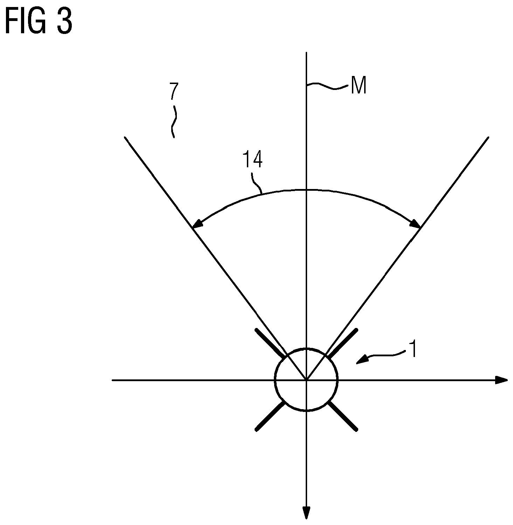

Fig. 3 zeigt eine zur Seitenprofilansicht der FIG. 2 senkrechte Schnittprofilansicht des Flugkörpers 1 bezüglich der senkrecht durch die Polachse P und den Koordinatenursprung verlaufenden Azimut-Hauptebene des Kugelkoordinatensystems. Wie aus der FIG. 3 ersichtlich ist, überstreicht das Sichtfeld 7 in der Azimut-Hauptebene einen bestimmten Azimutwinkelbereich 14.

Aus der Zusammensicht der FIG. 2 und FIG. 3 ergibt sich insbesondere, dass das Sichtfeld 7 des Seitensichtsensors 2 auf einen seitlich zur Längsachse L ausgerichteten Raumbereich beschränkt ist, der nicht konzentrisch zur Längsachse L ist.

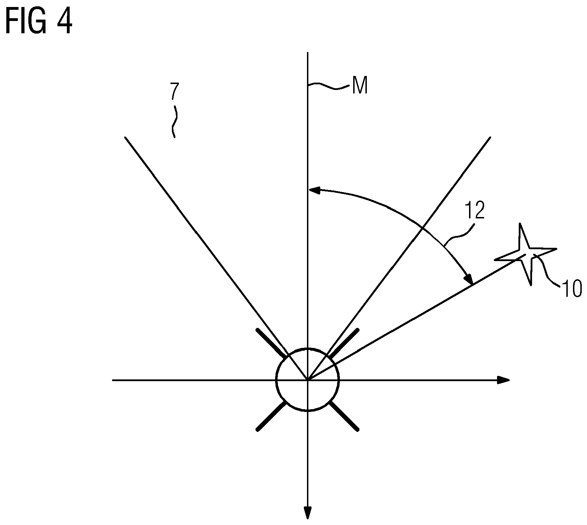

FIG. 4 zeigt eine der Schnittprofilansicht der FIG. 3 entsprechende Darstellung mit einem Zielobjekt 10, das außerhalb des Sichtfelds 7 gelegen ist. Aufgrund des zur Längsachse L seitlich weg weisenden Sichtfelds 7 ist es für die Sensoranordnung, d.h. den Seitensichtsensor 2 mit einem zur Längsachse L nicht konzentrischen Sichtfeld 7, in der Regel nicht ausreichend, allein das kopfseitige Ende KE des Flugkörpers 1 auf das Zielobjekt 10 hin auszurichten.

Zu diesem Zweck ist die Flugkörpersteuerung des Flugkörpers 1 speziell eingerichtet, um eine Erfassung des Zielobjekts 10 mittels des Seitensichtsensors 2 in effizienter Weise zu ermöglichen.

Speziell ist die Flugkörpersteuerung, beispielsweise eine korrespondierende Steuereinheit, dazu eingerichtet, über eine (nicht näher gezeigte, weiter oben jedoch bereits näher beschriebene) Empfangseinheit Zielobjekt-Daten zum Zielobjekt 10, beispielsweise von einer Sendeeinheit einer Abschussplattform oder einer Kontrolleinheit, zu empfangen.

Die Zielobjekt-Daten umfassen Daten zur Position, Orientierung und Geschwindigkeit des Zielobjekts 10.

Die Zielobjekt-Daten können beispielsweise mittels eines Sensorsystems, basierend z.B. auf Radartechnik oder anderen Sensortechnologien, ermittelt sein, wobei die Zielobjekt-Daten unabhängig vom Seitensichtsensor 2 ermittelt sind. Beispielsweise kann die Position bzw. Lage des Zielobjekts vor Start des Flugkörpers 1 durch ein Radarsystem einer der Abschussplattform zugeordneten Abschusseinheit ermittelt sein/werden. Entsprechende Zielobjekt-Daten können dann vor Start des Flugkörpers 1 oder auch nach dessen Start zum Flugkörper 1 übertragen werden.

Nach Start des Flugkörpers 1 können entsprechende Zielobjekt-Daten an den Flugkörper 1 übertragen werden, sollte dies beispielsweise erforderlich sein, wenn das vom Seitensichtsensor 2 einmal erfasste Zielobjekt 10 wieder aus dem Sichtfeld 7 verschwindet und/oder wenn zur Erhöhung der Genauigkeit der Zielführung weitere Daten erforderlich sind.

In der in FIG. 4 gezeigten Situation befindet sich das Zielobjekt 10 nicht im Sichtfeld 7 des Seitensichtsensors 2. Jedoch ist die Flugkörpersteuerung dazu eingerichtet, basierend auf den empfangenen Zielobjekt-Daten die Orientierung, insbesondere die Rolllage, des Flugkörpers 1 derart einzustellen, dass das Zielobjekt 10 in das Sichtfeld 7 des Seitensichtsensors 2 gelangt, zumindest jedoch in den vom Sichtfeld 7 überstrichenen Azimutwinkelbereich 14 gelangt.

Damit kann trotz des für eine Zielführung ungünstigen, seitlich ausgerichteten Sichtfelds 7 des Seitensichtsensors 2 basierend auf den empfangenen Zielobjekt-Daten, die repräsentativ für Vorwissen über das Zielobjekt 10 sind, dennoch eine effiziente Zielführung erreicht werden. Nach Erfassen des Zielobjekts 10 durch den Seitensichtsensor 2 kann die Zielführung und Zielerkennung, zumindest teilweise, gestützt werden auf Sensordaten des Seitensichtsensors 2.

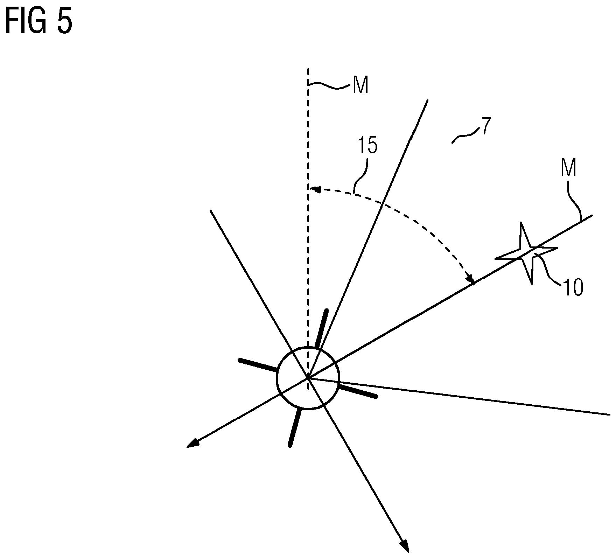

Beispielhaft ist eine Ausrichtung des Flugkörpers 1 hin zum Zielobjekt 10 basierend auf Zielobjekt-Daten in FIG. 5 gezeigt.

Die Ausrichtung des Flugkörpers 1 erfolgt analog für den Fall, dass der Seitensichtsensor 2 das Zielobjekt 10 erfasst hat, und sich die Position und Lage des Zielobjekts 10 relativ zum Sichtfeld 7 verändert. Dabei können Sensordaten des Seitensichtsensors 2 zum Zielobjekt 10 verwendet werden, wobei eine entsprechende Ausrichtung des Flugkörpers 1 einer Anpassung der Ausrichtung des Sichtfelds 7 entspricht, die den durch die Relativbewegung von Flugkörper 1 und Zielobjekt 10 geänderten Umständen Rechnung trägt.

In der in FIG. 5 gezeigten Situation ist das Zielobjekt 10 im Sichtfeld 7, d.h. im Erfassungsbereich, des Seitensichtsensors 2 gelegen. Um den Flugkörper 1 entsprechend ausrichten zu können, ist die Flugkörpersteuerung dazu eingerichtet, basierend auf den empfangenen Zielobjekt-Daten insbesondere die Rolllage des Flugkörpers 1 zu steuern, derart, dass der Rollwinkel 15 des Flugkörpers 1 so verändert bzw. eingestellt wird, dass die dadurch verursachte, um die Längsachse L erfolgende Drehung bzw. Rotation des Sichtfelds 7 das Zielobjekt 10 in den vom Sichtfeld 7 in Azimutwinkelrichtung überstrichenen Erfassungsbereich des Seitensichtsensors 2 gelangt. In FIG. 5 ist die Einstellung bzw. die Veränderung der Rolllage, sprich des Rollwinkels 15, gegenüber der Situation in FIG. 4 durch gestrichelte Linien, die einerseits die Lage der Mittenachse M nach FIG. 4 und andererseits den Rollwinkel 15 aufzeigen, angedeutet.

Nachdem der Flugkörper 1 derart orientiert, bzw. ausgerichtet ist, dass das Zielobjekt 10 im Sichtfeld 7 des Seitensichtsensors 2 gelegen ist, kann die Zielführung auf das Zielobjekt 10 hin, zumindest teilweise, unter Verwendung der Sensordaten des Seitensichtsensors 2 erfolgen. Hierzu kann die Flugkörpersteuerung entsprechend eingerichtet sein, das Zielobjekt 10 basierend auf den Sensordaten des Seitensichtsensors 2 zu verfolgen und den Flugkörper 1 auf das Zielobjekt 10 hin zu einem voraussichtlichen Begegnungsort zwischen Flugkörper 1 und Zielobjekt 10, d.h. prädiktiv, zu lenken.

Abgesehen von der Einstellung bzw. Steuerung der Rolllage, d.h. des Rollwinkels 15, können entsprechend auch Nick- und Gierwinkel des Flugkörpers 1 eingestellt werden, damit das Zielobjekt 10 in das Sichtfeld 7 des Seitensichtsensors 2 gelangt.

Roll-, Nick- und Gierwinkel können, nachdem das Zielobjekt 10 basierend auf Sensordaten des Seitensichtsensors 2 erfasst ist, in geeigneter Weise gesteuert werden, derart, dass das Zielobjekt 10 im Sichtfeld 7 verbleibt und der Flugkörper 1 gleichzeitig entsprechend einer Flugbahn zum voraussichtlichen Begegnungsort gelenkt wird.

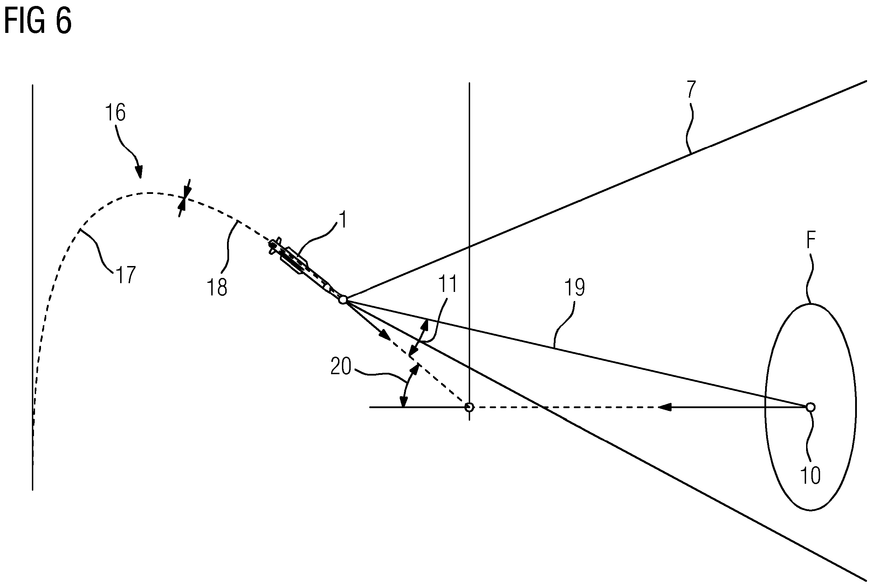

Anhand der FIG. 6, die eine schematische Darstellung eines sich längs einer Flugbahn 16 bewegenden Flugkörpers 1 zeigt, wird nachfolgend ein möglicher Ablauf zur Zielführung, d.h. Zielnavigation, des Flugkörpers 1 beschrieben, wobei die Zielnavigation zumindest teilweise bzw. abschnittsweise längs der Flugbahn 16 gestützt ist auf die empfangenen Zielobjekt-Daten und die Sensordaten des Seitensichtsensors 2.

Die Flugbahn 16 des Flugkörpers 1 kann bei der Zielführung auf das Zielobjekt 10 hin in eine Annäherungsphase 17 und eine Abfangphase 18 unterteilt werden. In der Annäherungsphase 17 an das Zielobjekt 10 werden an die Flugkörpersteuerung Zielobjekt-Daten übertragen, die, wie bereits beschrieben, mittels einer bezüglich des Flugkörpers 1 externen Sensorquelle, beispielsweise einer Abschussplattform, eines Bodenradars oder eines Sensornetzes, erfasst wurden.

Die Zielobjekt-Daten sind repräsentativ für Vorwissen über beispielsweise die Position des Zielobjekts 10, die Orientierung des Zielobjekts 10 und die Geschwindigkeit des Zielobjekts 10, wobei die genannten Parameter bzw. Daten jeweils auch als Relativdaten, d.h. relativ zu entsprechenden Daten des Flugkörpers 1, verwendet werden oder vorliegen können. Hierzu kann beispielsweise die Flugkörpersteuerung aus einer Inertialnavigation und anderweitigen internen oder externen Quellen, wie beispielsweise externen oder internen Sensoren, insbesondere GNSS-Sensoren, verfügbare Daten zu Position, Orientierung und/oder Geschwindigkeit des Flugkörpers 1 verwenden, um entsprechende absolute oder relative Größen zu ermitteln bzw. zu berechnen.

Weist der Flugkörper 1 neben dem Seitensichtsensor 2 einen oder mehrere weitere Zielsuchsensoren auf, kann die Flugkörpersteuerung Zielobjekt-Daten, insbesondere relativ zum Flugkörper 1, auch zumindest teilweise basierend auf Sensordaten des einen oder der mehreren weiteren Zielsuchsensoren ermitteln.

Da in der Annäherungsphase 17 nach Start des Flugkörpers 1 nicht zwingend sichergestellt ist, dass der Flugkörper 1 so ausgerichtet ist, dass das Zielobjekt 10 bezüglich des Sichtfelds 7 des Seitensichtsensor 2 optimal gelegen und erfassbar ist, verfügt die Flugkörpersteuerung über eine Funktion zur Einstellung der Orientierung, beispielsweise der Rolllage, des Flugkörpers 1 derart, dass das Sichtfeld 7 in geeigneter Weise auf das Zielobjekt 10 ausgerichtet werden kann, insbesondere auf Grundlage von Zielobjekt-Daten.

Basierend auf einem voraussichtlichen, d.h. prädiktiven, Begegnungsort kann die Flugkörpersteuerung die Orientierung des Flugkörpers 1 derart einstellen, steuern und/oder eine entsprechende Flugbahn 16 ermitteln, dass der Seitensichtsensor 2 eine direkte Sichtlinie zum Zielobjekt 10 hat (analog zu der in FIG. 6 für die Abfangphase 18 gezeigten direkten Sichtlinie 19).

Beispielsweise kann zur Einstellung eines geeigneten Begegnungswinkels 20 zwischen Flugkörper 1 und Zielobjekt 10 eine sog. "Trajectory Shaping Guidance" verwendet werden. Mit einer geeigneten Einstellung des Begegnungswinkels 20 wird auch der Polarwinkel Theta 11 des Zielobjekts 1 im Koordinatensystem des Seitensichtsensors 2 eingestellt.

Wie bereits beschrieben, ist die Flugkörpersteuerung dazu eingerichtet, insbesondere den Rollwinkel 15 des Flugkörpers 1 zu steuern bzw. zu regeln derart, dass das Zielobjekt 1 vorzugsweise mittig bezüglich des vom Sichtfeld 7 überstrichenen Azimutwinkelbereichs 14 des Seitensichtsensors 2 zu liegen kommt. Nach Ausgestaltungen kann vorgesehen sein, dass der Rollwinkel 15 derart gesteuert wird, dass das Zielobjekt 1 mit einem vorgegebenen Abstand zum Sichtfeldrand des Sichtfelds 7 zu liegen kommt. Bei einer entsprechenden Einstellung der Orientierung bzw. Ausrichtung des Sichtfelds 7 kann erreicht werden, dass in der an die Annäherungsphase 17 folgenden Abfangphase 18 die Zielerfassung basierend auf Sensordaten des Seitensichtsensors 2 robust gegenüber etwaigen Ausweichmanövern des Zielobjekts 10 und damit verbundenen Änderungen der Sichtlinie, insbesondere bezüglich des Polarwinkels 11 ist. Die Ausführungen zum Rollwinkel 15 gelten entsprechend für den Gier- und Nickwinkel des Flugkörpers 1.

In der auf die Annäherungsphase 17 folgenden Abfangphase 18 kann die Flugkörpersteuerung den Flugkörper 1 basierend auf Vorwissen, d.h. basierend auf empfangenen Daten zum Zielobjekt 10, und/oder basierend auf Sensordaten des Seitensichtsensors 2 über die Orientierung, Position und Geschwindigkeit des Zielobjekts 10 zum voraussichtlichen Begegnungsort lenken. Hierzu kann beispielsweise eine zielsuchende Lenkung, wie z.B. eine Proportionalnavigation (bekannt beispielsweise aus Paul Zarchan, 2007, Tactical and Strategic Missile Guidance, 5th Edition, ISBN-10: 1-56347-874-9, Kapitel 6) verwendet werden.

Besonders vorteilhaft kann es sein, wenn in der Annäherungsphase 17 die Orientierung des Flugkörpers 1 bereits derart eingestellt ist, dass das Zielobjekt 10 einen möglichst großen Abstand zum Sichtfeldrand des Sichtfelds 7 aufweist. Ist das der Fall, kann bei einem ausreichend großen oder groß eingestellten Sichtfeld 7 bei bewegten Zielobjekten 10 im Rahmen von zu erwartenden Ausweichmanövern des Zielobjekts 10 die weitere Zielführung ohne besondere Rücksicht auf den Polarwinkel Theta 11 erfolgen. Für das Abfangen von ruhenden bzw. stehenden Zielobjekten, kann jedoch weiterhin beispielsweise eine sog. "Trajectory Shaping Guidance" notwendig sein und genutzt werden, mit der in der Abfangphase 18 weiterhin ein günstiger Polarwinkel Theta 11 für das Zielobjekt 10 erreicht werden kann.

Ergänzend wird in der Abfangphase 18 weiterhin eine Regelung bzw. Einstellung des Rollwinkels 15 des Flugkörpers 1 durchgeführt, so dass das Zielobjekt 10 optimal im erfassbaren Azimutwinkelbereich 14 des Seitensichtsensors 2 gelegen ist.

Es zeigt sich, dass mit der beschriebenen Flugkörpersteuerung bzw. einem korrespondierenden Verfahren eine effiziente Zielführung des Flugkörpers 1 erreicht werden kann.

Damit in Kombination mit einer geeigneten Lenkung des Flugkörpers 1 ein Zielobjekt 10 im vorderen Halbraum des Flugkörpers 1 in ausreichender Entfernung erfassbar ist, ist es von Vorteil, wenn das Sichtfeld 7 einen ausreichend großen Polarwinkelbereich 13 und einen ausreichend großen Azimutwinkelbereich 14 aufweist.

Vorteilhafterweise sind die Flugkörpersteuerung und der Seitensichtsensor 2 derart eingerichtet, dass der Fehler der Ermittlung der Orientierung und/oder der Position des Zielobjekts 10 zumindest in der Annäherungsphase 17 beim Übergang zur Abfangphase 18 und ggf. auch in weiteren Flugphasen kleiner, insbesondere deutlich kleiner, ist als der jeweils vom Sichtfeld 7 überstrichene Erfassungsbereich, der definiert ist durch den Azimutwinkelbereich 14 und den Polarwinkelbereich 13 des Seitensichtsensors 2. Der Fehler F der Daten zum Zielobjekt 10 (in FIG. 6 dargestellt durch einen um das Zielobjekt 10 verlaufenden Fehlerkreis), sei es basierend auf den empfangenen Zielobjekt-Daten oder auf Sensordaten des Seitensichtsensors 2, ist vorzugsweise kleiner als der Abstand des Zielobjekts 10 vom Sichtfeldrand des Seitensichtsensors 2.

Weiterhin kann es hinsichtlich einer effizienten Zielführung von Vorteil sein, wenn der Erfassungsbereich des Sichtfelds 7 des Seitensichtsensors 2 je nach erwarteter Dynamik des Zielobjekts 10 ausreichend groß ausgelegt ist, damit bei nicht erwarteten Ausweichmanövern das Zielobjekt 10 weiterhin im Erfassungsbereich des Sichtfelds 7 bleibt. Bei langsam bewegten Zielobjekten 10 ist es von Vorteil, wenn der Polarwinkelbereich 13 des Seitensichtsensors 2 möglichst weit nach vorne in Richtung des Flugkörperkopfs 4 reicht, damit beim Lenken des Flugkörpers 1 auf das langsam bewegte Zielobjekt 10 hin ein geeigneter Polarwinkel 8 der Mittenachse M eingestellt werden kann.

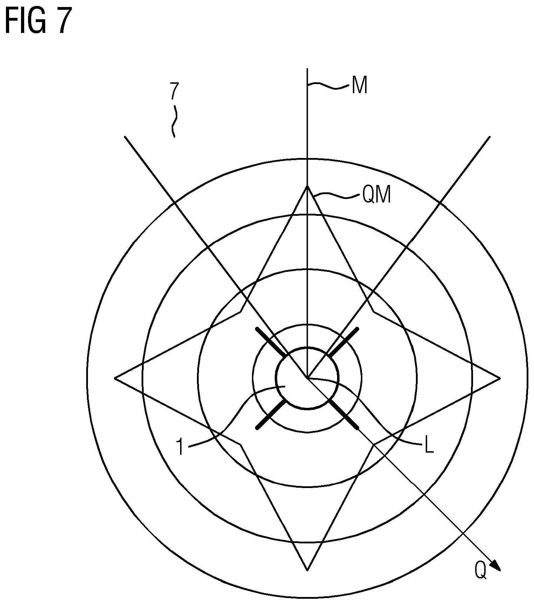

Gibt es bevorzugte Manöverebenen des Flugkörpers 1, kann der oder können die Seitensichtsensoren 2 zweckmäßigerweise so ausgerichtet integriert sein/werden, dass die Radialkomponente der Mittenachse M des Sichtfelds 7 in Richtung einer Manöverebene des Flugkörpers 1 ausgerichtet ist, in der die Querbeschleunigungsfähigkeit vergleichsweise groß ist, insbesondere ein Maximum aufweist. Eine entsprechende schematische Darstellung ist in FIG. 7 gegeben.

FIG. 7 zeigt einerseits das Sichtfeld 7 und andererseits in einem Kreiskoordinatensystem, dessen Ursprung mit der Längsachse L zusammenfällt, die Querbeschleunigungsfähigkeit Q des Flugkörpers 1.

Wie in FIG. 7 dargestellt ist, fällt zumindest die Radialkomponente der Mittenachse M des Sichtfelds 7 mit einer Richtung maximaler Querbeschleunigungsfähigkeit QM zusammen, was bedeutet, dass der Erfassungsbereich des Seitensichtsensors 2 gleich ausgerichtet ist, wie eine starke Manöverebene des Flugkörpers 1. Eine derartige Sensoranordnung hat insbesondere den Vorteil, dass auf Veränderungen der Lage des Zielobjekts 10 im Sichtfeld 7 des Seitensichtsensors 2, beispielsweise auf Grund von Ausweichmanövern des Zielobjekts 10, besonders schnell reagiert werden kann.

Der Seitensichtsensor 2 und etwaige weitere Zielsuchsensoren sind nicht auf Radarsensoren beschränkt, sondern es können im Wesentlichen jegliche Art und Kombination von Sensoren verwendet werden, die in einen Flugkörper 1 integriert werden können, und die es ermöglichen, Positions-, Orientierungs- und/oder Geschwindigkeitsinformationen über ein Zielobjekt 10 zu erfassen. Geeignet sind beispielsweise, aber nicht ausschließlich, optische Sensoren im infraroten oder visuellen Bereich oder Radarsensoren.

Abgesehen von einer Montage bzw. Integration des Seitensichtsensors 2 am Lenkteil 5 kann/können der Seitensichtsensor 2 oder auch mehrere Seitensichtsensoren an beliebigen geeigneten Stellen seitlich entlang des Flugkörperkorpus des Flugkörpers 1 angeordnet sein.

Damit der jeweils zur Zielführung und Zielobjektverfolgung benötigte bzw. erforderliche Raumwinkelbereich erfasst werden kann, ist es einerseits möglich, dass der Seitensichtsensor 2 und ggf. weitere Zielsuchsensoren ein starr ausgerichtetes Sichtfeld 7 aufweisen, das beispielsweise eingerichtet ist, einen größeren Raumbereich zu erfassen, und andererseits, dass diese ein kleineres Sichtfeld 7 aufweisen, das innerhalb des erfassbaren Raumbereichs mechanisch oder anderweitig ausrichtbar ist.

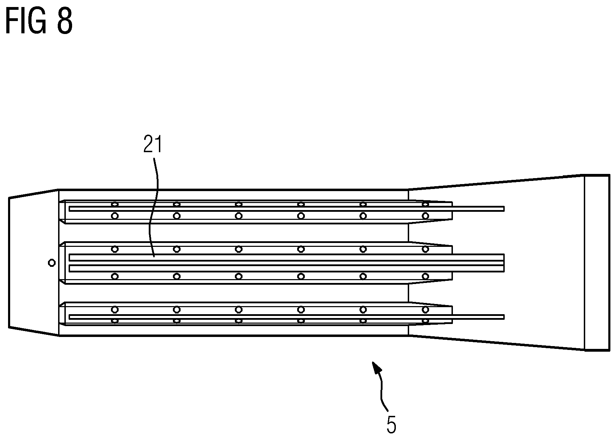

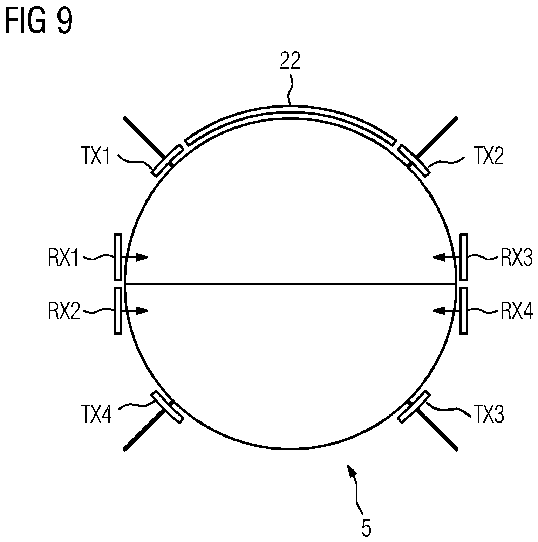

FIG. 8 und FIG. 9 zeigen ein Ausführungsbeispiel zur Anordnung von Radarantennen zur Implementierung eines Seitensichtsensors 2. Die sich aus FIG. 9 zumindest zeichnerisch ergebende Aufweitung des Durchmessers des Flugkörpers 1 durch Anordnung der Radarantennen ist lediglich der Klarheit der Darstellung geschuldet. Eine Aufweitung des Durchmessers ist im Allgemeinen nicht erforderlich.

Der Seitensichtsensor 2 umfasst am Umfang des Flugkörperkorpus angeordnete Radarantennen 21, die im Zusammenhang mit FIG. 9 noch genauer beschrieben werden. In dem in FIG. 8 gezeigten Beispiel umfasst der Flugkörper 1 einen optionalen GNSS-Sensor 22, der beispielsweise zur Ermittlung von Positionsdaten des Flugkörpers 1 herangezogen werden kann. Positionsdaten und/oder Geschwindigkeitsdaten des Flugkörpers 1 können zusätzlich oder alternativ auf Grundlage einer (nicht gezeigten) Inertialreferenzanlage ermittelt werden.

Der im Ausführungsbeispiel der FIG. 9 gezeigte Seitensichtsensor 2 ist eingerichtet insbesondere für einen Flugkörper 1 mit vier starken Manöverebenen, wie im Zusammenhang mit FIG. 7 beschrieben wurde. Ein mit einem derartigen Seitensichtsensor 2 bestückter Flugkörper 1 eignet sich insbesondere für das Abfangen von relativ schnell bewegten Zielobjekten 10 in der Luft.

Der Seitensichtsensor 2 umfasst vier Sendeantennen TX1 bis TX4 und zwei Paare zu je zwei Empfangsantennen RX1, RX3 und RX2, RX4, was auch in FIG. 9 dargestellt ist.

Die Radarantennen TX, RX sind am Umfang des Lenkteils 5 verteilt angeordnet, wobei die einzelnen Radarantennen im vorliegenden Beispiel als Oberflächenwellenantennen bzw. als substratintegrierte Leckwellenantennen, mithin als frequenzschwenkende Antennen ausgebildet sind, die eine Schwenkung des Sichtfelds 7 ermöglichen. Bei geeignetem Betrieb kann erreicht werden, dass die Antennendiagramme derartiger Radarantennen relativ schmal über dem Polarwinkelbereich 13 fokussieren, während sie über dem Azimutwinkelbereich 14 vergleichsweise weit aufgefächert sind.

Über die Wahl der Sendefrequenz der Sendeantennen TX kann das Sichtfeld 7 über dem Polarwinkelbereich 13 ausgerichtet werden, wobei das Sichtfeld 7 bei geeigneten Frequenzen in einem Polarwinkelbereich 13 von nahezu Null Grad bis hin zu größeren, zweistelligen Polarwinkeln ausrichtbar ist.

Mit den gezeigten vier Sendeantennen TX und geeigneten Betriebsfrequenzen kann der vordere Halbraum, d.h. der zum Flugkörperkopf 4 hin betrachtete Halbraum, ausgenommen eines zum gesamten Halbraum vergleichsweise kleinen und zur Längsachse L des Flugkörpers 1 konzentrischen, sich vom Flugkörperkopf 4 nach vorne erstreckenden Raumkegels, mit dem Sichtfeld 7 des Seitensichtsensors 2 gut ausgeleuchtet werden.

Mit den Empfangsantennen RX, die an gegenüberliegenden Seiten des Flugkörperkorpus angeordnet sind und die jeweils in Richtung einer starken Manöverebene ausgerichtet sind, können reflektierte Radarsignale aus zwei gegenüberliegenden Raumsegmenten empfangen und erfasst werden.

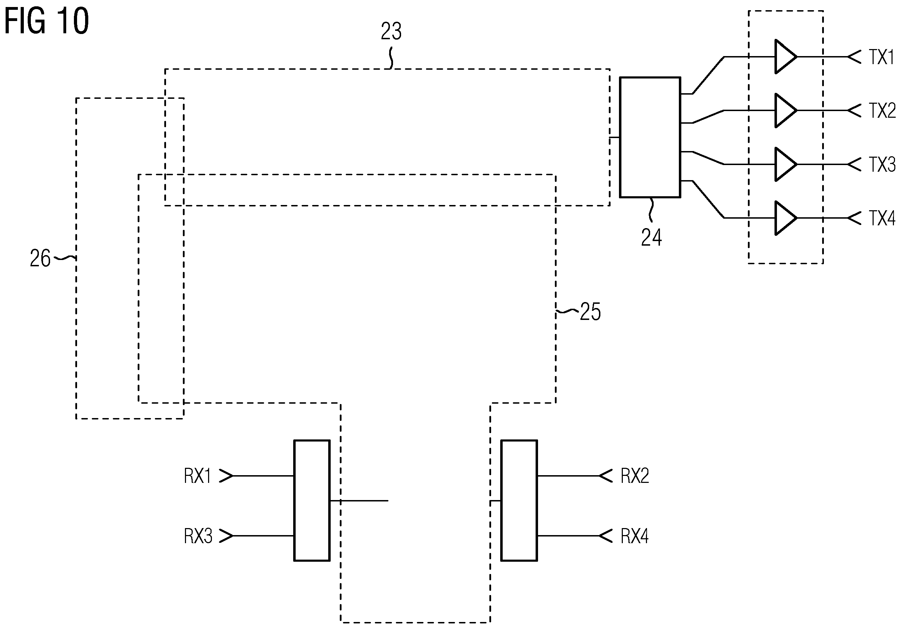

Wie aus der Schaltung nach FIG. 10 ersichtlich ist, kann ein entsprechender Seitensichtsensor 2 einen Sendekanal 23 (schematisch symbolisiert durch ein gestricheltes Rechteck) umfassen, der über ein Schaltnetzwerk 24 auf eine der vier Sendeantennen TX 1 bis TX 4 geschalten ist. Die Schaltung umfasst ferner einen Empfangskanal 25 (wiederum schematisch symbolisiert durch ein gestricheltes Rechteck), mit dem die Empfangsantennenpaare RX1, RX3 bzw. RX2, RX4 jeweils über ein Schaltnetzwerk verbunden sind.

Zur Erfassung eines Zielobjekts 10, d.h. zur Detektion und Lokalisierung eines Zielobjekts 10, verwendet eine entsprechende Flugkörpersteuerung, wie weiter oben bereits beschrieben, Vorwissen in Form von Zielobjekt-Daten, die beispielsweise per Datenfunk als Einweisungsinformation über den erwarteten Ort des Zielobjekts 10 dienen. Die Flugkörpersteuerung, insbesondere die Schaltung, schaltet basierend auf dem Vorwissen die Sendekanäle 23 und Empfangskanäle 25 auf die Sendeantennen TX und Empfangsantennen RX, so dass das sich ergebende Sichtfeld 7 in die Richtung des zu erwartenden Orts zeigt.

Die Schaltung nach FIG. 10 umfasst des Weiteren eine Auswerteeinheit 26 (schematisch symbolisiert durch ein gestricheltes Rechteck) zur Auswertung der Signale der Empfangsantennen RX, insbesondere zur Ermittlung von Daten zum Zielobjekt 10, insbesondere aus Signalen der Empfangsantennen RX.

In einem beispielhaften Anwendungsfall können für ein Zielobjekt 10, das in FIG. 9 links oben im Raumsegment zwischen Sendeantenne TX1 und dem Empfangsantennenpaar RX1 und RX3 erwartet würde, die jeweiligen Sende- 23 und Empfangskanäle 25 entsprechend auf diese Antennen TX1 bzw. RX1, RX3 geschaltet werden.

Ergibt sich aus den Daten zum Zielobjekt 10 hingegen, dass sich das Zielobjekt 10 an einem Ort in einem Raumsegment befindet, der z.B. in Azimutwinkelrichtung, durch Antennenpaarungen nicht abgedeckt werden kann, beispielsweise in einem Raumsegment, das oberhalb der Sendeantennen TX1 und TX2 oder unterhalb der Sendeantennen TX3 und TX4 gelegen ist, ändert die Flugkörpersteuerung die Rolllage, die Nicklage und/oder die Gierlage des Flugkörpers 1 derart, dass das Zielobjekt 10 in ein Sichtfeld 7 einer der Antennenpaarungen gelangt und beispielsweise mit einem der Empfangsantennenpaare RX1, RX3, oder RX2 und RX4 erfasst werden kann.

Sobald der Seitensichtsensor 2 das Zielobjekt 10 erfasst hat, wird die Orientierung des Flugkörpers 1, insbesondere die Rolllage, d.h. der Rollwinkel 15, die Nicklage und/oder die Gierlage, so geregelt, dass das Zielobjekt 10 etwa mittig im Sichtfeld 7 und damit im vorteilhaften Erfassungsbereich bzw. der starken Manöverebene bleibt.

Lücken der Raumabdeckung über dem Polarwinkel Theta 11 in Folge einer begrenzten Richtbarkeit der Antennendiagramme über dem Polarwinkel Theta 11 können beispielsweise dadurch vermieden werden, dass ein geeigneter Annäherungsweg bzw. eine vorteilhafte Flugbahn 16 an das Zielobjekt 10 gewählt wird. Beispielsweise kann die Flugbahn 16 derart gewählt bzw. ermittelt werden, dass sich längs der Flugbahn 16 unter Berücksichtigung der jeweiligen Position des Zielobjekts 10 ein geeigneter Polarwinkel Theta 11 für die direkte Sichtlinie 19 vom Flugkörper 1 auf das Zielobjekt 10 ergibt.

Zur Lenkung in der Annäherungsphase 17 kann, wie bereits erwähnt, eine sog. "Trajectory Shaping Guidance" verwendet werden, bei welcher der Begegnungswinkel 20 zwischen Zielobjekt 10 und Flugkörper 1 derart in Abhängigkeit der Geschwindigkeiten von Flugkörper 1 und Zielobjekt 10 optimiert wird, dass sich für den Übergang zur Abfangphase 18 ein günstiger Polarwinkel Theta 11 der Sichtlinie 19 ergibt.

Mit der hierin vorgeschlagenen Flugkörpersteuerung und dem hierin vorgeschlagenen Verfahren kann für das Erfassen von bewegten Zielobjekten 10 in einem zur Längsachse L des Flugkörpers 1 konzentrischen Raumkegel im vorderen Halbraum des Flugkörpers 1 ein seitlich aus dem Flugkörper 1 herausschielender Zielsuchsensor, d.h. der hierin vorgeschlagene Seitensichtsensor 2, verwendet werden. Der Seitensichtsensor 2 kann jeweils nur ein beschränktes, nicht zur Flugkörperachse L konzentrisches Raumsegment gut erfassen. Mit der hierin vorgeschlagenen Lenkung basierend auf Vorwissen, ist es jedoch möglich, die Unzulänglichkeiten hinsichtlich des beschränkten Sichtfelds 7 zumindest weitgehend zu kompensieren. Ferner ermöglicht die hierin vorgeschlagene Erfindung, dass der für einen kopfseitigen Zielsuchsensor mit einem zur Längsachse L des Flugkörpers 1 konzentrischen Sichtfeld bisher typischerweise benötigte Bauraum im Flugkörperkopf 4 bzw. in der Flugkörpernase für andere Funktionalisierungen freigehalten werden kann, beispielsweise für einen oder mehrere weitere Sensoren, ein gerichtetes Wirksystem oder ein Hitzeschild. Ferner ermöglicht die zu Grunde liegende Erfindung die Umsetzung eines multimodalen Lenkteils 5, beispielsweise mit einer Kombination aus Radar- und Infrarot-Suchköpfen, ohne dass dazu eine gemeinsame Apertur (z.B. in der Flugkörperspitze) für die verschiedenen Sensoren notwendig wäre. Beispielsweise kann ein Infrarot-Suchkopf in der Flugkörperspitze unabhängig von einem am Umfang des Flugkörperrumpfes montierten Seitensichtsensor 2 vorgesehen werden.

### Bezugszeichen

- 1: Flugkörper
- 2: Seitensichtsensor
- 3: Antrieb
- 4: Flugkörperkopf
- 5: Lenkteil
- 6: Gefechtskopf
- 7: Sichtfeld
- 8: Mittenachsen-Polarwinkel
- 10: Zielobjekt
- 11: Polarwinkel Theta
- 12: Azimutwinkel Phi
- 13: Polarwinkelbereich
- 14: Azimutwinkelbereich
- 15: Rollwinkel
- 16: Flugbahn
- 17: Annäherungsphase
- 18: Abfangphase
- 19: Sichtlinie
- 20: Begegnungswinkel
- 21: Radarantenne
- 22: GNSS-Sensor
- 23: Sendekanal
- 24: Schaltnetzwerk
- 25: Empfangskanal
- 26: Auswerteeinheit

- AE: antriebsseitiges Ende
- D: Abstand
- F: Fehler
- KE: kopfseitiges Ende
- L: Längsachse
- M: Mittenachse
- P: Polachse
- Q: Querbeschleunigungsfähigkeit
- QM: maximale Querbeschleunigungsfähigkeit
- TX: Sendeantenne
- RX: Empfangsantenne

## Patentansprüche

1. Flugkörpersteuerung zur Zielführung eines Flugkörpers (1) längs einer Flugbahn (16) zu einem Zielobjekt (10), umfassend:
zumindest einen zur Erfassung von Umgebungsdaten eingerichteten Seitensichtsensor (2) mit einem quer zur Längsachse (L) des Flugkörpers (1) ausgerichteten Sichtfeld (7),
**gekennzeichnet durch**
- eine Steuereinheit umfassend eine Empfangseinheit zum Empfang von unabhängig vom Seitensichtsensor (2) ermittelten Zielobjekt-Daten zum Zielobjekt (10) von einer flugkörper-externen Sendeeinheit, wobei die Zielobjekt-Daten Daten zur Position, Daten zur Orientierung und Daten zur Geschwindigkeit des Zielobjekts (10) umfassen, wobei
- die Steuereinheit derart eingerichtet ist, die Orientierung des Flugkörpers (1) bei der Zielführung zumindest teilweise basierend auf den empfangenen Zielobjekt-Daten derart einzustellen, dass das Zielobjekt (10) zumindest in Abschnitten einer finalen Zielführungsphase im Sichtfeld (7) des Seitensichtsensors (2) gelegen ist.

2. Flugkörpersteuerung nach Anspruch 1, wobei die Steuereinheit eingerichtet ist, basierend auf den empfangenen Zielobjekt-Daten, die Orientierung des Flugkörpers (1) durch aktive Steuerung des Nick-, Gier- und/oder Rollwinkels (15) des Flugkörpers (1) derart einzustellen, dass das Zielobjekt (10) zumindest in Abschnitten der Zielführung innerhalb des vom Sichtfeld (7) bezüglich einer durch die Längsachse (L) definierten Polachse (P) überstrichenen Azimutwinkelbereichs (14) liegt.

3. Flugkörpersteuerung nach Anspruch 1 oder 2, wobei die Steuereinheit eingerichtet ist, basierend auf den Zielobjekt-Daten, die Flugbahn (16) und/oder Orientierung des Flugkörpers (1) derart einzustellen, dass das Zielobjekt (10) zumindest in Abschnitten der Zielführung innerhalb des vom Sichtfeld (7) bezüglich einer durch die Längsachse (L) definierten Polachse (P) überstrichenen Polarwinkelbereichs (13) liegt.

4. Flugkörpersteuerung nach einem der Ansprüche 1 bis 3, wobei der Seitensichtsensor (2) derart eingerichtet ist, dass eine Richtcharakteristik des Seitensichtsensors (2) durch die Flugkörpersteuerung anpassbar ist, und wobei die Flugkörpersteuerung derart eingerichtet ist, die Richtcharakteristik derart anzupassen, dass das Zielobjekt (10) zumindest abschnittsweise längs der Flugbahn (16) innerhalb des Sichtfelds (7) gelegen ist.

5. Flugkörpersteuerung nach einem der Ansprüche 1 bis 4, wobei die Steuereinheit eingerichtet ist, ein im Sichtfeld (7) gelegenes Zielobjekt (10) zu erfassen, und dessen Position, Orientierung und/oder Geschwindigkeit basierend auf Sensordaten des Seitensichtsensors (2) zu ermitteln, und wobei die Steuereinheit eingerichtet ist, basierend auf der ermittelten Position, Orientierung und/oder Geschwindigkeit des Zielobjekts (10) eine Flugbahn (16, 17, 18) zum adaptiv aktiven, prädiktiven Lenken des Flugkörpers (1) zu einem voraussichtlichen Begegnungsort mit dem Zielobjekt (10) zu ermitteln.

6. Flugkörpersteuerung nach Anspruch 5, wobei die Steuereinheit dazu eingerichtet ist, im Rahmen des adaptiv aktiven, prädiktiven Lenkens zumindest einen der folgenden Schritte auszuführen:
- prädiktives Ermitteln des voraussichtlichen Begegnungsorts des Flugkörpers (1) mit dem Zielobjekt (10) und Ermitteln eines Begegnungswinkels (20) derart, dass das Sichtfeld (7) eine direkte Sichtlinie (19) auf das Zielobjekt (10) umfasst;
- prädiktives Ermitteln der Flugbahn (16) und/oder der Orientierung des Flugkörpers (1) derart, dass in Azimut- und/oder Polarwinkelrichtung bezüglich der Längsachse (L) des Flugkörpers (1) als Polachse (P) das Zielobjekt (10) einen vorgegebenen Abstand zu Sichtfeldrändern des Sichtfelds (7) aufweist.

7. Flugkörpersteuerung nach einem der Ansprüche 1 bis 6, umfassend des Weiteren zumindest einen Zielsuchsensor mit einem zur Längsachse (L) des Flugkörpers (1) konzentrischen Sichtfeld, wobei die Flugkörpersteuerung dazu eingerichtet ist, zur Zielführung des Flugkörpers (1) des Weiteren von dem Zielsuchsensor erfasste Daten zu verwenden.

8. Flugkörpersteuerung nach einem der Ansprüche 1 bis 7, wobei der Seitensichtsensor (2) einen oder mehrere optische Sensoren, einen oder mehrere Infrarot-Sensoren und/oder einen oder mehrere Radarsensoren (TX, RX) umfasst, und wobei die Flugkörpersteuerung dazu eingerichtet ist, aus Sensordaten jeweiliger Sensoren Position, Orientierung und/oder Geschwindigkeit eines detektierten Zielobjekts (10) zu ermitteln.

9. Flugkörpersteuerung nach einem der Ansprüche 1 bis 8, deren Steuereinheit ferner dazu eingerichtet ist, einen bezüglich der Längsachse (L) des Flugkörpers (1) als Polachse (P) definierten Azimutwinkelbereich (14) des Sichtfelds (7) und einen bezüglich der Längsachse (L) des Flugkörpers (1) als Polachse (P) definierten Polarwinkelbereich (13) des Sichtfelds (7) derart einzustellen und/oder die Flugbahn (16) und die Orientierung des Flugkörpers (1) derart zu steuern, dass wenigstens eine der folgenden Bedingungen erfüllt ist:
- der Azimutwinkelbereich (14) und/oder der Polarwinkelbereich (13) werden/wird umso größer eingestellt, je größer der Fehler der Ermittlung von Position, Orientierung und/oder Geschwindigkeit des Zielobjektes (10) ist,
- der Azimutwinkelbereich (14) und/oder der Polarwinkelbereich (13) werden/wird zumindest in einer finalen Zielführungsphase derart eingestellt, dass diese/r größer sind/ist, als der Fehler der Ermittlung von Position, Orientierung und/oder Geschwindigkeit des Zielobjektes (10);
- der Azimutwinkelbereich (14) und/oder der Polarwinkelbereich (13) werden/wird umso größer eingestellt je größer die Geschwindigkeit des Zielobjekts (10) ist;
- der Polarwinkel der Mittenachse (M) des Sichtfelds (7) wird abhängig von einer ermittelten Geschwindigkeit des Zielobjekts (10) eingestellt, wobei der Polarwinkel (8) der Mittenachse (M) umso kleiner eingestellt wird, je kleiner die Geschwindigkeit des Zielobjekts (10) ist.

10. Flugkörper, insbesondere Lenkflugkörper (1), mit einer Flugkörpersteuerung nach einem der Ansprüche 1 bis 9.

11. Flugkörper (1) nach Anspruch 10, wobei die Mittenachse (M) des Sichtfelds (7) bezüglich der Längsachse (L) des Flugkörpers (1) eine Radialkomponente und eine Axialkomponente aufweist, wobei der Seitensichtsensor (2) bezüglich des Flugkörperkorpus derart angeordnet ist, dass die Radialkomponente im Wesentlichen parallel zu einer Manöverebene des Flugkörpers (1) ausgerichtet ist, in welcher die Querbeschleunigungsfähigkeit (Q) des Flugkörpers (1) ein Maximum (QM) aufweist, und wobei die Axialkomponente parallel zur Längsachse (L) ausgerichtet ist.

12. Verfahren zur Zielführung eines nach Anspruch 10 oder 11 ausgebildeten Flugkörpers (1) längs einer Flugbahn (16) zu einem ruhenden oder bewegten Zielobjekt (10), **gekennzeichnet durch** die folgenden, von der Flugkörpersteuerung des Flugkörpers (1) ausgeführten Schritte:
- Empfangen von Daten zur Position, Daten zur Orientierung und Daten zur Geschwindigkeit des Zielobjekts (10) von einer flugkörper-externen Sendeeinheit;
- Ausrichten des Sichtfelds (7) des Seitensichtsensors (2) auf das Zielobjekt (10) durch Ausrichten des Seitensichtsensors (2) durch Steuern der Richtcharakteristik des Seitensichtsensors (2), durch Ausrichten des Flugkörpers (1) und/oder durch Einstellen der Flugbahn (16) des Flugkörpers (1) basierend auf den empfangenen Daten derart, dass das Zielobjekt (10) in einer ersten Flugphase in das Sichtfeld (7) des Seitensichtsensors (2) gelangt; und,
- während einer auf die erste Flugphase folgenden zweiten Flugphase, Ausrichten des Sichtfelds (7) auf das Zielobjekt (10) durch Steuerung der Richtcharakteristik des Seitensichtsensors (2), der Orientierung und/oder der Flugbahn (16) des Flugkörpers (1) basierend auf den Sensordaten des Seitensichtsensors (2) derart, dass das Zielobjekt (10) im Sichtfeld (7) gelegen ist,
wobei die Daten zur Position, die Daten zur Orientierung und die Daten zur Ausrichtung unabhängig vom Seitensichtsensor (2) ermittelt sind oder werden.

13. Verfahren nach Anspruch 12, wobei zum Ausrichten des Sichtfelds (7) auf das Zielobjekt (10) der Roll- (15), Nick- und/oder Gierwinkel des Flugkörpers (1) adaptiv aktiv eingestellt wird/werden basierend auf den empfangenen Daten und den ermittelten Sensordaten des Seitensichtsensors (2).

14. Verfahren nach Anspruch 12 oder 13, wobei das Sichtfeld (7) derart ausgerichtet wird, dass das Zielobjekt (10) zumindest abschnittsweise in den Flugphasen innerhalb des vom Sichtfeld (7) bezüglich der durch die Längsachse (L) des Flugkörpers (1) definierten Polachse (P) überstrichenen Azimutwinkelbereichs (14) und Polarwinkelbereichs (13) liegt und von den in Azimutwinkel- und Polarwinkelrichtung gelegenen Sichtfeldrändern einen vorgegebenen Abstand aufweist, der größer ist, als der Fehler (F) der Zielobjekterkennung.

15. Verfahren nach einem der Ansprüche 12 bis 14, umfassend des Weiteren:
adaptiv aktives Lenken des Flugkörpers (1) basierend auf einer aus Sensordaten des Seitensichtsensors (2) ermittelten Position, Orientierung und/oder Geschwindigkeit des Zielobjekts (10), wobei das adaptiv aktive Lenken zumindest einen der folgenden Schritte umfasst:
- Ermitteln eines Begegnungsorts des Flugkörpers (1) mit dem Zielobjekt (10) und Einstellen eines Flugwinkels (20) des Flugkörpers (1) relativ zum Zielobjekt (10) derart, dass das Sichtfeld (7) des Seitensichtsensors (2) eine direkte Sichtlinie (19) auf das Zielobjekt (10) umfasst;
- Ermitteln der Flugbahn (16), der Orientierung des Flugkörpers (1) und/oder des Flugwinkels (20) relativ zum Zielobjekt (10) derart, dass in Azimut- und/oder Polarwinkelrichtung das Zielobjekt (10) einen vorgegebenen Abstand zum Sichtfeldrand des Sichtfelds (7) aufweist;
- Erfassen von Sensordaten mittels eines Zielsuchsensors mit einem konzentrisch zur Längsachse (L) des Flugkörpers (1) ausgerichteten Sichtfeld (7) und Ermitteln der Flugbahn (16), der Orientierung und/oder des Flugwinkels (20) des Flugkörpers (1) basierend des Weiteren zumindest teilweise auf den Sensordaten des Zielsuchsensors.

16. Verfahren nach einem der Ansprüche 12 bis 15, wobei zumindest basierend auf Sensordaten des Seitensichtsensors (2) die Position, die Orientierung und/oder die Geschwindigkeit des Zielobjekts (10) ermittelt wird/werden, und wobei basierend auf der ermittelten Position, Orientierung und/oder Geschwindigkeit des Zielobjekts (10) zumindest einer der folgenden Schritte von der Flugkörpersteuerung des Flugkörpers (1) ausgeführt wird:
- Einstellen oder Steuern der Orientierung und/oder der Flugbahn (16) des Flugkörpers (1) basierend auf der ermittelten Position, Orientierung und/oder Geschwindigkeit des Zielobjekts (10);
- Einstellen eines umso größeren Azimutwinkelbereichs (14) für den Seitensichtsensor (2) je größer der Fehler (F) bei der Ermittlung von Position, Orientierung und/oder Geschwindigkeit des Zielobjektes (10) ist;
- Einstellen des Azimutwinkelbereichs (14) des Seitensichtsensors (2) derart, dass dieser zumindest in einer finalen Zielführungsphase größer ist, als der Fehler (F) der Ermittlung von Position, Orientierung und/oder Geschwindigkeit des Zielobjektes (10);
- Einstellen des Azimutwinkelbereichs (14) und/oder des Polarwinkelbereichs (13) des Seitensichtsensors (2) in Abhängigkeit der ermittelten Geschwindigkeit des Zielobjekts (10);
- Einstellen des Polarwinkels der Mittenachse (M) des Sichtfelds (7) in Abhängigkeit der ermittelten Geschwindigkeit des Zielobjekts (10), wobei der Polarwinkel der Mittenachse (M) umso kleiner eingestellt wird, je kleiner die Geschwindigkeit des Zielobjekts (10) ist.

17. Verfahren nach einem der Ansprüche 12 bis 16, wobei das Ausrichten des Sichtfelds (7) des Weiteren umfasst:
- Einstellen des einstellbar eingerichteten Azimutwinkelbereichs (14), des einstellbar eingerichteten Polarwinkelbereichs (13) und/oder Ausrichten der ausrichtbar eingerichteten Mittenachse (M) des Sichtfelds (7), wobei das Einstellen und/oder Ausrichten basierend zumindest auf Sensordaten des Seitensichtsensors (2) derart erfolgt, dass das Zielobjekt (10) zumindest abschnittsweise längs der Flugbahn (16) innerhalb des Sichtfelds (7) gelegen ist.

## Claims

1. Missile controller for guiding a missile (1) along a flight path (16) to a target object (10), comprising:
at least one side-looking sensor (2), designed to record surroundings data, having a field of view (7) aligned transverse to the longitudinal axis (L) of the missile (1),
**characterized by**
- a control unit comprising a reception unit for receiving target object data regarding the target object (10), determined independently of the side-looking sensor (2), from a missile-external transmission unit, wherein the target object data comprise data regarding the position, data regarding the orientation and data regarding the speed of the target object (10), wherein
- the control unit is designed to set the orientation of the missile (1) during the guidance at least partly based on the received target object data such that the target object (10) is located in the field of view (7) of the side-looking sensor (2) at least in sections of a final guidance phase.

2. Missile controller according to Claim 1, wherein the control unit is designed, based on the received target object data, to set the orientation of the missile (1) by actively controlling the pitch, yaw and/or roll angle (15) of the missile (1) such that the target object (10) is located, at least in sections of the guidance, within the azimuthal angle range (14) covered by the field of view (7) with respect to a polar axis (P) defined by the longitudinal axis (L).

3. Missile controller according to Claim 1 or 2, wherein the control unit is designed, based on the target object data, to set the flight path (16) and/or orientation of the missile (1) such that the target object (10) is located, at least in sections of the guidance, within the polar angle range (13) covered by the field of view (7) with respect to a polar axis (P) defined by the longitudinal axis (L).

4. Missile controller according to one of Claims 1 to 3, wherein the side-looking sensor (2) is designed such that a directional characteristic of the side-looking sensor (2) is able to be adjusted by the missile controller, and wherein the missile controller is designed to adapt the directional characteristic such that the target object (10) is located within the field of view (7) at least in sections along the flight path (16).

5. Missile controller according to one of Claims 1 to 4, wherein the control unit is designed to detect a target object (10) located in the field of view (7) and to determine its position, orientation and/or speed based on sensor data from the side-looking sensor (2), and wherein the control unit is designed, based on the determined position, orientation and/or speed of the target object (10), to determine a flight path (16, 17, 18) for adaptively actively, predictively guiding the missile (1) to a provisional meeting location with the target object (10).

6. Missile controller according to Claim 5, wherein the control unit is designed to perform at least one of the following steps in the context of the adaptively active, predictive guidance:
- predictively determining the provisional meeting location of the missile (1) with the target object (10) and determining a meeting angle (20) such that the field of view (7) comprises a direct line of sight (19) onto the target object (10);
- predictively determining the flight path (16) and/or the orientation of the missile (1) such that the target object (10) is at a predefined distance from field of view edges of the field of view (7) in the azimuthal and/or polar angle direction with respect to the longitudinal axis (L) of the missile (1) as polar axis (P).

7. Missile controller according to one of Claims 1 to 6, furthermore comprising at least one target-seeking sensor having a field of view concentric to the longitudinal axis (L) of the missile (1), wherein the missile controller is designed to furthermore use data recorded by the target-seeking sensor to guide the missile (1).

8. Missile controller according to one of Claims 1 to 7, wherein the side-looking sensor (2) comprises one or more optical sensors, one or more infrared sensors and/or one or more radar sensors (TX, RX), and wherein the missile controller is designed to determine the position, orientation and/or speed of a detected target object (10) from sensor data from respective sensors.

9. Missile controller according to one of Claims 1 to 8, the control unit of which is furthermore designed to set an azimuthal angle range (14), defined with respect to the longitudinal axis (L) of the missile (1) as polar axis (P), of the field of view (7) and a polar angle range (13), defined with respect to the longitudinal axis (L) of the missile (1) as polar axis (P), of the field of view (7) and/or to control the flight path (16) and the orientation of the missile (1) such that at least one of the following conditions is met:
- the azimuthal angle range (14) and/or the polar angle range (13) are/is set to be greater the greater the error in the determination of position, orientation and/or speed of the target object (10),
- the azimuthal angle range (14) and/or the polar angle range (13) are/is set at least in a final guidance phase such that they/it are/is greater than the error in the determination of the position, orientation and/or speed of the target object (10);
- the azimuthal angle range (14) and/or the polar angle range (13) are/is set greater the greater the speed of the target object (10);
- the polar angle of the middle axis (M) of the field of view (7) is set on the basis of a determined speed of the target object (10), wherein the polar angle (8) of the middle axis (M) is set smaller the smaller the speed of the target object (10).

10. Missile, in particular guided missile (1), having a missile controller according to one of Claims 1 to 9.

11. Missile (1) according to Claim 10, wherein the middle axis (M) of the field of view (7) with respect to the longitudinal axis (L) of the missile (1) has a radial component and an axial component, wherein the side-looking sensor (2) is arranged with respect to the missile body such that the radial component is aligned substantially parallel to a manoeuvring plane of the missile (1) in which the missile (1) has a maximum (QM) transverse acceleration capability (Q), and wherein the axial component is aligned parallel to the longitudinal axis (L).

12. Method for guiding a missile (1) designed according to Claim 10 or 11 along a flight path (16) to a stationary or moving target object (10), **characterized by** the following steps performed by the missile controller of the missile (1) :
- receiving data regarding the position, data regarding the orientation and data regarding the speed of the target object (10) from a missile-external transmission unit;
- aligning the field of view (7) of the side-looking sensor (2) onto the target object (10) by aligning the side-looking sensor (2) by controlling the directional characteristic of the side-looking sensor (2), by aligning the missile (1) and/or by setting the flight path (16) of the missile (1) based on the received data such that the target object (10), in a first flight phase, moves into the field of view (7) of the side-looking sensor (2); and
- during a second flight phase following the first flight phase, aligning the field of view (7) onto the target object (10) by controlling the directional characteristic of the side-looking sensor (2), the orientation and/or the flight path (16) of the missile (1) based on the sensor data from the side-looking sensor (2) such that the target object (10) is located in the field of view (7),
wherein the data regarding the position, the data regarding the orientation and the data regarding the alignment are or have been determined independently of the side-looking sensor (2).

13. Method according to Claim 12, wherein, in order to align the field of view (7) onto the target object (10), the roll (15), pitch and/or yaw angle of the missile (1) is/are adaptively actively set based on the received data and the determined sensor data from the side-looking sensor (2).

14. Method according to Claim 12 or 13, wherein the field of view (7) is aligned such that the target object (10) is located, at least in sections in the flight phases, within the azimuthal angle range (14) and polar angle range (13) covered by the field of view (7) with respect to the polar axis (P) defined by the longitudinal axis (L) of the missile (1) and is at a predefined distance from the field of view edges, located in the azimuthal angle and polar angle direction, that is greater than the error (F) in the target object recognition.

15. Method according to one of Claims 12 to 14, furthermore comprising:
adaptively actively guiding the missile (1), based on a position, orientation and/or speed of the target object (10) as determined from sensor data from the side-looking sensor (2), wherein the adaptively active guidance comprises at least one of the following steps:
- determining a meeting location of the missile (1) with the target object (10) and setting a flight angle (20) of the missile (1) in relation to the target object (10) such that the field of view (7) of the side-looking sensor (2) comprises a direct line of sight (19) onto the target object (10);
- determining the flight path (16), the orientation of the missile (1) and/or the flight angle (20) in relation to the target object (10) such that the target object (10) is at a predefined distance from the field of view edge of the field of view (7) in the azimuthal and/or polar angle direction;
- recording sensor data by way of a target-seeking sensor having a field of view (7) aligned concentrically to the longitudinal axis (L) of the missile (1), and determining the flight path (16), the orientation and/or the flight angle (20) of the missile (1) furthermore based at least partly on the sensor data from the target-seeking sensor.

16. Method according to one of Claims 12 to 15, wherein the position, the orientation and/or the speed of the target object (10) is/are determined at least based on sensor data from the side-looking sensor (2), and wherein at least one of the following steps is performed by the missile controller of the missile (1) based on the determined position, orientation and/or speed of the target object (10) :
- setting or controlling the orientation and/or the flight path (16) of the missile (1) based on the determined position, orientation and/or speed of the target object (10);
- setting a greater azimuthal angle range (14) for the side-looking sensor (2) the greater the error (F) in the determination of position, orientation and/or speed of the target object (10);
- setting the azimuthal angle range (14) of the side-looking sensor (2) such that this is greater, at least in a final guidance phase, than the error (F) in the determination of position, orientation and/or speed of the target object (10);
- setting the azimuthal angle range (14) and/or the polar angle range (13) of the side-looking sensor (2) on the basis of the determined speed of the target object (10);
- setting the polar angle of the middle axis (M) of the field of view (7) on the basis of the determined speed of the target object (10), wherein the polar angle of the middle axis (M) is set smaller the smaller the speed of the target object (10).

17. Method according to one of Claims 12 to 16, wherein aligning the field of view (7) furthermore comprises:
- setting the settably designed azimuthal angle range (14), the settably designed polar angle range (13) and/or aligning the alignably designed middle axis (M) of the field of view (7), wherein the setting and/or alignment is performed based at least on sensor data from the side-looking sensor (2), such that the target object (10) is located within the field of view (7) at least in sections along the flight path (16).

## Revendications

1. Système de commande de missile pour guider vers la cible un missile (1) le long d'une trajectoire (16) vers un objet cible (10), comprenant :
au moins un capteur de vision latérale (2) conçu pour acquérir des données environnementales, et dont le champ de vision (7) est orienté transversalement par rapport à l'axe longitudinal (L) du missile (1),
**caractérisé par**
- une unité de commande comprenant une unité de réception destinée à recevoir des données d'objet cible déterminées indépendamment du capteur de vision latérale (2), relatives à l'objet cible (10), provenant d'une unité d'émission externe au missile, les données d'objet cible comprenant des données sur la position, des données sur l'orientation et des données sur la vitesse de l'objet cible (10),
- l'unité de commande étant conçue pour régler l'orientation du missile (1) pendant le guidage vers la cible au moins en partie sur la base des données d'objet cible reçues, de telle sorte que l'objet cible (10) se trouve dans le champ de vision (7) du capteur de vision latérale (2) au moins dans des parties d'une phase finale de guidage vers la cible.

2. Système de commande de missile selon la revendication 1, dans lequel l'unité de commande est conçue pour ajuster l'orientation du missile (1) en fonction des données d'objet cible reçues', par commande active de l'angle de tangage, de lacet et/ou de roulis (15) du missile (1) de telle sorte que l'objet cible (10) se trouve, au moins dans des parties du guidage vers la cible, à l'intérieur de la plage d'angles azimutaux (14) balayée par le champ de vision (7) par rapport à un axe polaire (P) défini par l'axe longitudinal (L).

3. Système de commande de missile selon la revendication 1 ou la revendication 2, dans lequel l'unité de commande est conçue pour régler, sur la base des données d'objet cible, la trajectoire (16) et/ou l'orientation du missile (1) de telle sorte que l'objet cible (10) se trouve, au moins dans des parties du guidage vers la cible, à l'intérieur de la plage d'angles polaires (13) balayée par le champ de vision (7) par rapport à un axe polaire (P) défini par l'axe longitudinal (L).

4. Système de commande de missile selon l'une des revendications 1 à 3, dans lequel le capteur de vision latérale (2) est conçu de telle sorte qu'une caractéristique directionnelle du capteur de vision latérale (2) peut être adaptée par le système de commande de missile, et dans lequel le système de commande de missile est conçu pour adapter la caractéristique directionnelle de telle sorte que l'objet cible (10) se trouve au moins par parties le long de la trajectoire (16) à l'intérieur du champ de vision (7).

5. Système de commande de missile selon l'une des revendications 1 à 4, dans lequel l'unité de commande est conçue pour détecter un objet cible (10) situé dans le champ de vision (7) et pour déterminer sa position, son orientation et/ou sa vitesse sur la base des données de capteur du capteur de vision latérale (2), et dans lequel l'unité de commande est conçue pour déterminer, sur la base de la position, de l'orientation et/ou de la vitesse déterminées de l'objet cible (10), une trajectoire (16, 17, 18) pour le guidage actif, prédictif, de manière adaptative du missile (1) vers un point de rencontre probable avec l'objet cible (10).

6. Système de commande de missile selon la revendication 5, dans lequel l'unité de commande est conçue pour mettre en œuvre au moins une des étapes suivantes dans le cadre du guidage actif, prédictif de manière adaptative :
- déterminer de manière prédictive le point de rencontre probable du missile (1) avec l'objet cible (10) et déterminer un angle de rencontre (20) de telle sorte que le champ de vision (7) comprenne une ligne de vision directe (19) vers l'objet cible (10) ;
- déterminer de manière prédictive la trajectoire (16) et/ou l'orientation du missile (1) de telle sorte que, dans la direction d'angles azimutaux et/ou polaires par rapport à l'axe longitudinal (L) du missile (1) en tant qu'axe polaire (P), l'objet cible (10) soit à une distance prédéfinie des bords de champ de vision du champ de vision (7) .

7. Système de commande de missile selon l'une des revendications 1 à 6, comprenant en outre au moins un capteur de recherche de cible avec un champ de vision concentrique à l'axe longitudinal (L) du missile (1), le système de commande de missile étant conçu pour utiliser en outre les données acquises par le capteur de recherche de cible pour guider le missile (1) vers la cible.

8. Système de commande de missile selon l'une des revendications 1 à 7, dans lequel le capteur de vision latérale (2) comprend un ou plusieurs capteurs optiques, un ou plusieurs capteurs infrarouges et/ou un ou plusieurs capteurs radar (TX, RX), et dans lequel le système de commande de missile est conçu pour déterminer, à partir des données de capteurs des capteurs respectifs, la position, l'orientation et/ou la vitesse d'un objet cible détecté (10).

9. Système de commande de missile selon l'une des revendications 1 à 8, dont l'unité de commande est en outre conçue pour régler une plage d'angles azimutaux (14) du champ de vision (7) définie par rapport à l'axe longitudinal (L) du missile (1) comme étant l'axe polaire (P) et une plage d'angles polaires (13) du champ de vision (7) définie par rapport à l'axe longitudinal (L) du missile (1) comme étant l'axe polaire (P), et/ou pour commander la trajectoire (16) et l'orientation du missile (1) de telle sorte qu'au moins l'une des conditions suivantes soit remplie :
- plus l'erreur de la détermination de la position, de l'orientation et/ou de la vitesse de l'objet cible (10) est grande, plus la plage d'angles azimutaux (14) et/ou la plage d'angles polaires (13) est/sont réglée(s) de manière à être d'autant plus grande(s),
- la plage d'angles azimutaux (14) et/ou la plage d'angles polaires (13) est/sont réglée(s), au moins dans une phase finale de guidage de la cible, de telle sorte qu'elle(s) soi(en)t plus grande(s) que l'erreur de détermination de la position, de l'orientation et/ou de la vitesse de l'objet cible (10) est importante ;
- la plage d'angles azimutaux (14) et/ou la plage d'angles polaires (13) est/sont réglée(s) de manière à être d'autant plus grandes que la vitesse de l'objet cible (10) est élevée ;
- l'angle polaire de l'axe central (M) du champ de vision (7) est réglé en fonction d'une vitesse déterminée de l'objet cible (10), l'angle polaire (8) de l'axe central (M) étant réglé d'autant plus petit que la vitesse de l'objet cible (10) est faible.

10. Missile, en particulier missile guidé (1), équipé d'un système de commande de missile selon l'une des revendications 1 à 9.

11. Missile (1) selon la revendication 10, dans lequel l'axe central (M) du champ de vision (7) présente une composante radiale et une composante axiale par rapport à l'axe longitudinal (L) du missile (1), le capteur de vision latérale (2) étant agencé par rapport au corps du missile de telle sorte que la composante radiale soit orientée sensiblement parallèlement à un plan de manœuvre du missile (1) dans lequel la capacité d'accélération transversale (Q) du missile (1) présente un maximum (QM), et la composante axiale étant orientée parallèlement à l'axe longitudinal (L).

12. Procédé de guidage vers la cible d'un missile (1) conçu selon la revendication 10 ou la revendication 11 le long d'une trajectoire (16) vers un objet cible (10) immobile ou en mouvement, **caractérisé par** les étapes suivantes, mises en œuvre par le système de commande du missile (1) :
- réception de données relatives à la position, de données relatives à l'orientation et de données relatives à la vitesse de l'objet cible (10) provenant d'une unité d'émission externe au missile ;
- alignement du champ de vision (7) du capteur de vision latérale (2) sur l'objet cible (10) par alignement du capteur de vision latérale (2) en commandant la caractéristique directionnelle du capteur de vision latérale (2), en orientant le missile (1) et/ou en ajustant la trajectoire (16) du missile (1) sur la base des données reçues, de telle sorte que l'objet cible (10) entre dans le champ de vision (7) du capteur de vision latérale (2) au cours d'une première phase de vol ; et
- pendant une deuxième phase de vol suivant la première phase de vol, alignement du champ de vision (7) sur l'objet cible (10) en commandant la caractéristique directionnelle du capteur de vision latérale (2), l'orientation et/ou la trajectoire (16) du missile (1) sur la base des données de capteur du capteur de vision latérale (2) de telle sorte que l'objet cible (10) se trouve dans le champ de vision (7),
les données de la position, les données de l'orientation et les données de l'alignement étant ou devant être déterminées indépendamment du capteur de vision latérale (2).

13. Procédé selon la revendication 12, dans lequel, pour aligner le champ de vision (7) sur l'objet cible (10), l'angle de roulis (15), l'angle de tangage et/ou l'angle de lacet du missile (1) est/sont réglé(s) activement de manière adaptative en fonction des données reçues et des données de capteur déterminées du capteur à vision latérale (2).

14. Procédé selon la revendication 12 ou la revendication 13, dans lequel le champ de vision (7) est aligné de telle sorte que l'objet cible (10) se trouve au moins partiellement, pendant les phases de vol, dans la plage d'angles azimutaux (14) et la plage d'angles polaires (13) balayées par le champ de vision (7) par rapport à l'axe polaire (P) défini par l'axe longitudinal (L) du missile (1), et se trouve à une distance prédéfinie des bords du champ de vision situés dans la direction de l'angle azimutal et de l'angle polaire, qui est supérieure à l'erreur (F) de détection de l'objet cible.

15. Procédé selon l'une des revendications 12 à 14, comprenant en outre :
la commande active de manière adaptative du missile (1) en fonction d'une position, d'une orientation et/ou d'une vitesse de l'objet cible (10) déterminées à partir des données de capteur du capteur de vision latérale (2), la commande active de manière adaptative comprenant au moins l'une des étapes suivantes :
- déterminer le point de rencontre entre le missile (1) et l'objet cible (10) et régler un angle de vol (20) du missile (1) par rapport à l'objet cible (10) de telle sorte que le champ de vision (7) du capteur de vision latérale (2) comprenne une ligne de vision directe (19) vers l'objet cible (10) ;
- déterminer la trajectoire (16), l'orientation du missile (1) et/ou l'angle de vol (20) par rapport à l'objet cible (10) de telle sorte que, dans la direction des angles azimutaux et/ou polaires, l'objet cible (10) soit à une distance prédéfinie du bord de champ de vision du champ de vision (7) ;
- acquérir des données de capteur au moyen d'un capteur de recherche de cible avec un champ de vision (7) aligné de manière concentrique par rapport à l'axe longitudinal (L) du missile (1) et déterminer la trajectoire (16), l'orientation et/ou l'angle de vol (20) du missile (1) en se basant en outre au moins partiellement sur les données de capteur du capteur de recherche de cible.

16. Procédé selon l'une des revendications 12 à 15, dans lequel la position, l'orientation et/ou la vitesse de l'objet cible (10) est/sont déterminée(s) au moins sur la base des données de capteur du capteur de vision latérale (2), et dans lequel, sur la base de la position, de l'orientation et/ou de la vitesse déterminées de l'objet cible (10), au moins l'une des étapes suivantes est mise en œuvre par le système de commande du missile (1) :
- réglage ou commande de l'orientation et/ou de la trajectoire (16) du missile (1) en fonction de la position, de l'orientation et/ou de la vitesse déterminées de l'objet cible (10) ;
- réglage d'une plage d'angles azimutaux (14) d'autant plus grande pour le capteur de vision latérale (2) que l'erreur (F) dans la détermination de la position, de l'orientation et/ou de la vitesse de l'objet cible (10) est importante ;
- réglage de la plage d'angles azimutaux (14) du capteur de vision latérale (2) de telle sorte qu'elle soit supérieure, au moins dans une phase finale de guidage vers la cible, à l'erreur (F) de détermination de la position, de l'orientation et/ou de la vitesse de l'objet cible (10) ;
- réglage de la plage d'angles azimutaux (14) et/ou de la plage d'angles polaires (13) du capteur de vision latérale (2) en fonction de la vitesse déterminée de l'objet cible (10) ;
- réglage de l'angle polaire de l'axe central (M) du champ de vision (7) en fonction de la vitesse déterminée de l'objet cible (10), l'angle polaire de l'axe central (M) étant réglé d'autant plus petit que la vitesse de l'objet cible (10) est faible.

17. Procédé selon l'une des revendications 12 à 16, dans lequel l'alignement du champ de vision (7) comprend en outre :
- le réglage de la plage d'angles azimutaux conçue pour être réglable (14), de la plage d'angles polaires conçue pour être réglable (13) et/ou l'alignement de l'axe central (M) conçu pour être alignable du champ de vision (7), le réglage et/ou l'alignement étant effectués sur la base au moins des données de capteur du capteur de vision latérale (2) de telle sorte que l'objet cible (10) soit situé au moins partiellement le long de la trajectoire (16) à l'intérieur du champ de vision (7).
